# EUROPEAN PATENT APPLICATION

(11) **EP 4 786 539 A2**
(43) Date of publication of application: **05.08.2026**
(21) Application number: 26185994.6
(22) Date of filing: 13.10.2023
(51) Int. Cl.: C08K 5/13

(54) **PILLARARENE COMPLEX**

(30) Priority: 14.10.2022 JP 2022165864
(62) Divisional of application: 23877371.7
(71) Applicant: DAIKIN INDUSTRIES, LTD., Osaka-shi, Osaka 530-0001 (JP); Kyoto University, Kyoto-shi, Kyoto 606-8501 (JP)
(72) Inventor: YAMAGUCHI, Shuhei, Osaka-Shi, Osaka, 530-0001 (JP); TANAKA, Yoshito, Osaka-Shi, Osaka, 530-0001 (JP); KOMORI, Masaji, Osaka-Shi, Osaka, 530-0001 (JP); YAMAUCHI, Akiyoshi, Osaka-Shi, Osaka, 530-0001 (JP); KISHIKAWA, Yosuke, Osaka-Shi, Osaka, 530-0001 (JP); OGOSHI, Tomoki, Kyoto-shi, Kyoto, 606-8501 (JP); ONISHI, Katsuto, Kyoto-shi, Kyoto, 606-8501 (JP); OHTANI, Shunsuke, Kyoto-shi, Kyoto, 606-8501 (JP)
(74) Representative: Hoffmann Eitle

(57) **Abstract**

An object of the present disclosure is to provide a composite having excellent heat resistance and/or hydrophobicity and allowing easy introduction of a functional group thereinto.

A composite comprising: a fluorine-containing polymer; and one or more cyclic compounds that include the fluorine-containing polymer, wherein
the cyclic compound comprises a compound represented by the following formula (I): 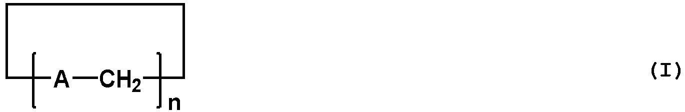 wherein
A independently represents a divalent C₄₋₅₀ organic group comprising one or more selected from -OR and -CO- ,
R independently represents an organic group optionally comprising one or more fluorine atoms, or a hydrogen atom , and
n represents an integer of 4 to 20.

## Description

### Technical Field

The present disclosure relates to a pillararene composite.

### Background Art

As composites obtained by combining a cyclic compound and a polymer, rotaxanes or pseudorotaxanes are known. A rotaxane is a structure having a cyclic compound, a polymer that penetrates through the ring of the cyclic compound, and a blocked portion disposed at an end of the polymer. A pseudorotaxane is a structure having a cyclic compound and a polymer that penetrates through the ring of the cyclic compound but having no blocked portion at a polymer end.

As such composites, Patent Literature 1 describes a clathrate compound including a fluoropolyether molecule as a guest compound in cyclodextrin.

Patent Literature 2 describes a polyrotaxane including polyethylene glycol, a pillararene that includes the polyethylene glycol in a skewered shape, and adamantane groups disposed at both ends of the polyethylene glycol.

Non Patent Literature 3 describes a rotaxane including a pillararene and a polyethylene or polypropylene included in the pillararene.

### Citation List

### Patent Literature

Patent Literature 1: International Publication No. WO 2007/058247
Patent Literature 2: JP 2021-138635 A

### Non Patent Literature

Non Patent Literature 1: Tomoki Ogoshi et al., "Extension of polyethylene chains by formation of polypseudorotaxane structures with perpentylated piller[5]arenes", Polymer Journal (2014) 46, 77 to 81

### Summary of Invention

### Technical Problem

Conventionally known composites are not capable of sufficiently satisfying heat resistance or hydrophobicity, and functional groups that can be introduced into cyclic compounds are limited.

The present disclosure has been made in consideration of such a circumstance, and an object of the present disclosure is to provide a composite having excellent heat resistance and/or hydrophobicity and allowing easy introduction of a functional group thereinto.

### Solution to Problem

The present disclosure includes the following aspects.
[1] A composite comprising: a fluorine-containing polymer; and one or more cyclic compounds that include the fluorine-containing polymer, wherein
   the cyclic compound comprises a compound represented by the following formula (I): 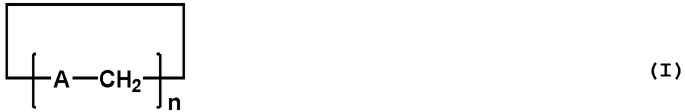 wherein
   A independently represents a divalent C₄₋₅₀ organic group comprising one or more selected from -OR and -CO- ,
   R independently represents an organic group optionally comprising one or more fluorine atoms, or a hydrogen atom, and
   n represents an integer of 4 to 20.
[2] The composite according to [1], wherein the cyclic compound comprises a compound represented by any of the following formulae (1) to (3): 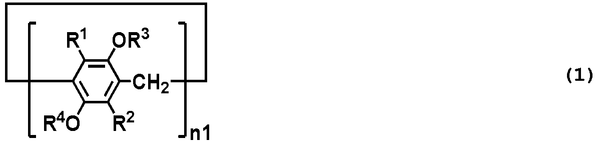 wherein
   R¹ independently represents a hydrogen atom or an organic group ,
   R² independently represents a hydrogen atom or an organic group ,
   R³ independently represents a hydrogen atom or an organic group ,
   R⁴ independently represents a hydrogen atom or an organic group , and
   n1 is an integer of 4 to 20, 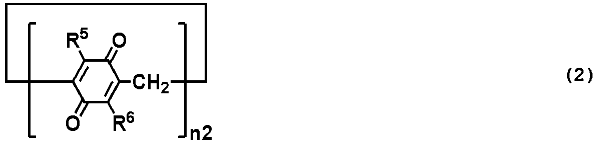 wherein
      R⁵ independently represents a hydrogen atom or an organic group ,
      R⁶ independently represents a hydrogen atom or an organic group , and
      n2 is an integer of 4 to 20, 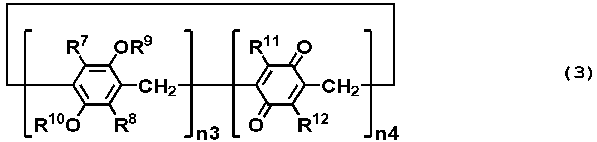 wherein
         R⁷ independently represents a hydrogen atom or an organic group ,
         R⁸ independently represents a hydrogen atom or an organic group ,
         R⁹ independently represents a hydrogen atom or an organic group ,
         R¹⁰ independently represents a hydrogen atom or an organic group ,
         R¹¹ independently represents a hydrogen atom or an organic group ,
         R¹² independently represents a hydrogen atom or an organic group ,
         n3 is an integer of 1 to 19,
         n4 is an integer of 1 to 19,
         a sum of n3 and n4 is 4 to 20, and
         an occurrence order of a unit enclosed in parentheses with n3 or n4 is arbitrary in the formula (3).
[3] The composite according to [2], wherein one or more selected from R¹ to R⁴ in the formula (1) is a fluorine-containing organic group.
[4] The composite according to [2] or [3], wherein one or more selected from R³ and R⁴ in the formula (1) is a hydrogen atom.
[5] The composite according to any one of [1] to [4], wherein the cyclic compound is a compound represented by any of the following formulae (1-A), (2-A), and (3-A): 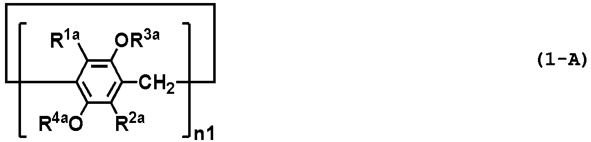 wherein
   R^{1a} independently represents a C₁₋₃₀ alkyl group optionally having one or more substituents or a hydrogen atom,
   R^{2a} independently represents a C₁₋₃₀ alkyl group optionally having one or more substituents or a hydrogen atom,
   R^{3a} independently represents a C₁₋₃₀ alkyl group optionally having one or more substituents or a hydrogen atom,
   R^{4a} independently represents a C₁₋₃₀ alkyl group optionally having one or more substituents or a hydrogen atom, and
   n1 is an integer of 4 to 20, 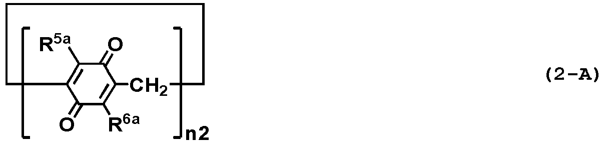 wherein
      R^{5a} independently represents a C₁₋₃₀ alkyl group optionally having one or more substituents or a hydrogen atom,
      R^{6a} independently represents a C₁₋₃₀ alkyl group optionally having one or more substituents or a hydrogen atom, and
      n2 is an integer of 4 to 20, 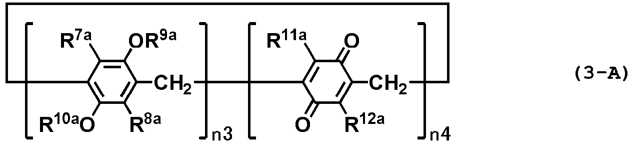 wherein
         R^{7a} independently represents a C₁₋₃₀ alkyl group optionally having one or more substituents or a hydrogen atom,
         R^{8a} independently represents a C₁₋₃₀ alkyl group optionally having one or more substituents or a hydrogen atom,
         R^{9a} independently represents a C₁₋₃₀ alkyl group optionally having one or more substituents or a hydrogen atom,
         R^{10a} independently represents a C₁₋₃₀ alkyl group optionally having one or more substituents or a hydrogen atom,
         R^{11a} independently represents a C₁₋₃₀ alkyl group optionally having one or more substituents or a hydrogen atom,
         R^{12a} independently represents a C₁₋₃₀ alkyl group optionally having one or more substituents or a hydrogen atom,
         n3 is an integer of 1 to 19,
         n4 is an integer of 1 to 19,
         a sum of n3 and n4 is 4 to 20, and
         provided that an occurrence order of a unit enclosed in parentheses with n3 or n4 is arbitrary in the formula (3-A).
[6] The composite according to any one of [1] to [5], wherein the fluorine-containing polymer is a linear fluorine-containing polymer optionally having one or more substituents.
[7] The composite according to any one of [1] to [6], wherein the fluorine-containing polymer comprises a fluorine-containing olefin-based polymer.
[8] The composite according to [7], wherein the fluorine-containing olefin-based polymer has a repeating unit formed of a fluorine-containing olefin compound represented by the following formula:

   CR^{f20}R^{f21} = CR^{f22}R^{f23}

   wherein
   R^{f20} represents one selected from a hydrogen atom, a fluorine atom, a chlorine atom, a C₁₋₅ fluoroalkyl group, and a C₁₋₅ perfluoroalkoxy group,
   R^{f21} represents one selected from a hydrogen atom, a fluorine atom, a chlorine atom, a C₁₋₅ fluoroalkyl group, and a C₁₋₅ perfluoroalkoxy group,
   R^{f22} represents one selected from a hydrogen atom, a fluorine atom, a chlorine atom, a C₁₋₅ fluoroalkyl group, and a C₁₋₅ perfluoroalkoxy group,
   R^{f23} represents one selected from a hydrogen atom, a fluorine atom, a chlorine atom, a C₁₋₅ fluoroalkyl group, and a C₁₋₅ perfluoroalkoxy group, and
   one or more of R^{f20} to R^{f23} is a fluorine atom.
[9] The composite according to [8], wherein the fluorine-containing olefin compound is one or more selected from tetrafluoroethylene, trifluoroethylene, vinylidene fluoride, chlorotrifluoroethylene, 1,2-difluoroethylene, hexafluoropropylene, 2,3,3,3-tetrafluoropropene, vinyl fluoride, perfluoromethyl vinyl ether, perfluoroethyl vinyl ether, and perfluoropropyl vinyl ether.
[10] The composite according to any one of [7] to [9], wherein the fluorine-containing olefin-based polymer comprises one or more selected from a chlorotrifluoroethylene/tetrafluoroethylene/perfluoro(alkyl vinyl ether) copolymer, an ethylene/tetrafluoroethylene copolymer, an ethylene/chlorotrifluoroethylene copolymer, polyvinylidene fluoride, a vinylidene fluoride/tetrafluoroethylene copolymer, a vinylidene fluoride/tetrafluoroethylene/chlorotrifluoroethylene copolymer, polychlorotrifluoroethylene, a vinylidene fluoride/hexafluoropropylene copolymer, a vinylidene fluoride/tetrafluoroethylene/hexafluoropropylene copolymer, and poly 1,2-difluoroethylene.
[11] The composite according to any one of [7] to [10], wherein the fluorine-containing olefin-based polymer comprises polyvinylidene fluoride.
[12] The composite according to any one of [1] to [11], wherein the fluorine-containing polymer comprises fluorine-containing polyether.
[13] The composite according to [12], wherein the fluorine-containing polyether is represented by the following formula:

   Y¹-R^{f1}-R^{F}-O-R^{f2}-Y²

   wherein
   R^{F} represents a divalent fluoropolyether group,
   Y¹ represents one selected from a halogen atom, a hydrogen atom, -COOR^{f3}, - OR^{f3}, -NR^{f3}₂, -NR^{f3}-CO-R^{f3}, -CO-NR^{f3}₂, -NO₂, -CN, -COR^{f4}, -SO₃R^{f4}, and -O-COR^{f4},
   Y² represents one selected from a halogen atom, a hydrogen atom, -COOR^{f3}, - OR^{f3}, -NR^{f3}₂, -NR^{f3}-CO-R^{f3}, -CO-NR^{f3}₂, -NO₂, -CN, -COR^{f4}, -SO₃R^{f4}, and -O-COR^{f4},
   R^{f1} represents a divalent hydrocarbon group optionally having one or more substituents, or a single bond,
   R^{f2} represents a divalent hydrocarbon group optionally having one or more substituents, or a single bond,
   R^{f3} independently represents a C₁₋₁₆ alkyl group optionally having one or more substituents, or a hydrogen atom ,
   R^{f4} independently represents a C₁₋₁₆ alkyl group optionally having one or more substituents, a hydrogen atom, or a halogen atom, and
   q is 0 or 1].
[14] The composite according to [13], wherein R^{F} is represented by the following formula:

   -(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

   wherein
   R^{Fa} is independently a hydrogen atom, a fluorine atom, or a chlorine atom ,
   a, b, c, d, e, and f are each independently an integer of 0 to 200, the sum of a, b, c, d, e, and f is 1 or more, and the occurrence order of the respective repeating units in parentheses with a, b, c, d, e, or f is arbitrary in the formula, provided that, when all R^{Fa} are hydrogen atoms or chlorine atoms, at least one of a, b, c, e, and f is 1 or more.
[15] The composite according to [13] or [14], wherein one or more R^{Fa} is a hydrogen atom.
[16] The composite according to any one of [13] to [15], wherein R^{F} is represented by the following formula (f7):

   -(CF₂CF₂CH₂O)_{d}- (f7)

   wherein d represents an integer of 1 to 200.
[17] The composite according to any one of [1] to [16], wherein a proportion of the cyclic compound is 0.01 mass% or more and 99 mass% or less in a total of 100 parts by mass of the fluorine-containing polymer and the cyclic compound.
[18] The composite according to any one of [1] to [17], wherein the fluorine-containing polymer has at least one selected from a glass transition temperature and a melting point at 50°C or higher.
[19] The composite according to any one of [1] to [18], wherein a pyrolysis temperature is 170°C or higher.
[20] A method for producing the composite according to any one of [1] to [19], the method comprising: contacting the fluorine-containing polymer and the cyclic compound represented by the formula (I) with each other in an absence of a solvent to obtain the composite.
[21] The production method according to [20], wherein the contacting is performed at a temperature higher than at least one of a glass transition temperature and a melting point of the fluorine-containing polymer.
[22] A composition comprising the composite according to any one of [1] to [19].
[23] The composition according to [22], which is in a powder form.
[24] The composition according to [22], which is in a liquid form.

### Advantageous Effects of Invention

The composite of the present disclosure has excellent heat resistance and/or hydrophobicity and allows easy introduction of a functional group thereinto.

### Brief Description of Drawings

[FIG. 1] FIG. 1 is an NMR chart of the composite obtained in Example 1.
[FIG. 2] FIG. 2 is an NMR chart of the purified product obtained in Comparative Example 1.
[FIG. 3] FIG. 3 is a DSC chart of each composite obtained in Example 2.
[FIG. 4] FIG. 4 is a DSC chart of each composite obtained in Example 3.
[FIG. 5] FIG. 5 is a DSC chart of each composite obtained in Example 4.
[FIG. 6] FIG. 6 is an X-ray diffraction chart of each composite obtained in Example 2.
[FIG. 7] FIG. 7 is an X-ray diffraction chart of each composite obtained in Example 3.

### Description of Embodiments

### <Composite>

A composite of the present disclosure comprises a fluorine-containing polymer and one or more cyclic compounds that include the fluorine-containing polymer, and the cyclic compound comprises a compound represented by the following formula (I): 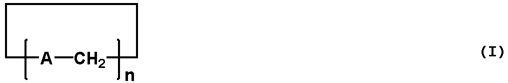 wherein
A independently represents a divalent C₄₋₅₀ organic group comprising one or more selected from -OR and -CO- ,
R independently represents an organic group that may comprise one or more fluorine atoms or a hydrogen atom, and
n represents an integer of 4 to 20.

The composite of the present disclosure comprises a fluorine-containing polymer and the cyclic compound and thus has favorable heat resistance and/or hydrophobicity and allows easy introduction of a functional group thereinto. The composite of the present disclosure is expected to be easily mixed with, for example, a variety of resins or the like that cannot be mixed with the fluorine-containing polymer alone while maintaining the properties, such as heat resistance and hydrophobicity, of the fluorine-containing polymer. Furthermore, in the composite of the present disclosure, the cyclic compound is not fixed to the fluorine-containing polymer and is thus movable even in the case of, for example, being mixed with a resin and is expected to be capable of exhibiting characteristics, such as a shock-absorbing property.

In the present disclosure, inclusion means that at least a part of the fluorine-containing polymer is present in the ring of the cyclic compound. In one aspect, the fluorine-containing polymer may penetrate through the ring of the cyclic compound. In addition, the number of the cyclic compounds that include one fluorine-containing polymer can be 1 or more, and the number is preferably 1 in one aspect and preferably 2 or more in another aspect. The upper limit thereof is 5 or less or 3 or less on average and preferably 1 or less per repeating unit of the polymer. For example, in a case where the number of the repeating units of the polymer is indicated by j, the number of the cyclic compounds in one composite is preferably 5 × j or less, more preferably 3 × j or less, and still more preferably j or less.

In the formula (I), A independently represents a divalent C₄₋₅₀ organic group and comprise one or more selected from -OR and -CO-.

The C₄₋₅₀ organic group can be preferably a C₄₋₂₀ organic group and more preferably a C₄₋₁₀ organic group.

In the present disclosure, a monovalent or divalent "organic group" means a monovalent or divalent group comprising carbon. The monovalent or divalent organic group is not limited and can be a hydrocarbon group or a derivative thereof. The derivative of a hydrocarbon group means a group having one or more of N, O, S, Si, an amide, sulfonyl, a siloxane, carbonyl, carbonyloxy, and the like in an end or molecular chain of the hydrocarbon group. In the case of being simply mentioned, "organic group" means a monovalent organic group.

In addition, in the present disclosure, "hydrocarbon group" means a group comprising carbon and hydrogen that is obtained by eliminating one hydrogen atom from a hydrocarbon. Such a hydrocarbon group is not limited, and examples thereof include C₁₋₂₀ hydrocarbon groups, for example, C₁₋₂₀ aliphatic hydrocarbon groups, C₆₋₂₀ aromatic hydrocarbon groups, and the like. The "aliphatic hydrocarbon group" may be any of a linear, branched, or cyclic group and may be any of a saturated or unsaturated group. In addition, the hydrocarbon group may include one or more ring structures. In addition, the hydrocarbon group may have one or more substituents.

In the present disclosure, the substituent in the "hydrocarbon group" is not limited, and examples thereof include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

"Divalent C₄₋₅₀ organic group" in the divalent organic group comprising one or more selected from -OR and -CO- that is represented by A can be preferably a divalent C₆₋₂₀ aromatic hydrocarbon group or a divalent C₃₋₂₀ alicyclic hydrocarbon group.

The divalent C₆₋₂₀ aromatic hydrocarbon group can be preferably a divalent C₆₋₁₀ aromatic hydrocarbon group, more preferably a divalent C₆₋₈ aromatic hydrocarbon group, and particularly preferably a phenylene group.

The divalent C₃₋₂₀ alicyclic hydrocarbon group may be any of a saturated alicyclic hydrocarbon group and an unsaturated alicyclic hydrocarbon group. The divalent C₃₋₂₀ alicyclic hydrocarbon group can be preferably a divalent C₆₋₁₀ unsaturated alicyclic hydrocarbon group, more preferably a divalent C₆₋₈ unsaturated alicyclic hydrocarbon group, and particularly preferably a cyclohexadienyl group.

The divalent C₄₋₅₀ organic groups comprising one or more selected from -OR and -CO- that is represented by A each independently can be preferably one selected from a divalent C₆₋₂₀ aromatic hydrocarbon group having -OR as a substituent, a C₃₋₂₀ alicyclic hydrocarbon group in which a hydrogen atom bound to the carbon atom constituting the ring is replaced with -OR, and a C₃₋₂₀ alicyclic hydrocarbon group in which -CH₂-constituting the ring is replaced with -CO- and can be more preferably one selected from a divalent C₆₋₁₀ aromatic hydrocarbon group having -OR as a substituent and a C₆₋₁₀ alicyclic hydrocarbon group in which -CH₂- constituting the ring is replaced with - CO- .

The total number of -OR and -CO- that are contained in A is one or more and four or less and preferably two.

R independently represents an organic group that may comprise one or more fluorine atoms or a hydrogen atom.

Examples of the organic group represented by R include an alkyl group, an alkyloxy group, an alkyl ether group, a tosyl group, a triflate group, a phenyl group, and the like, and these groups may have one or more substituents.

The substituent that the organic group represented by R may have is not limited, and examples thereof include reactive functional groups such as a hydroxyl group, an amino group, a carboxy group, a thiol group, an isocyanate group, a nitrile group, an epoxy group, and an acetyl group; aliphatic hydrocarbon groups such as an alkyl group, a vinyl group, and an ethynyl group; halogen atoms. Examples of such halogen atoms include a fluorine atom, a chlorine atom, a bromine atom, and an iodine atom, and the halogen atom can be preferably a fluorine atom or a chlorine atom.

The alkyl group in R is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group in R include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms. Examples of the halogen atoms include a fluorine atom, a chlorine atom, a bromine atom, and an iodine atom, and the halogen atom is preferably a fluorine atom or a chlorine atom.

The alkyloxy group in R is typically a group represented by -O-R²¹ (in the formula, R²¹ is an alkyl group that may have one or more substituents).

The alkyl group in R²¹ may be replaced with the above-described substituent and may be preferably replaced with a fluorine atom. The alkyl group is preferably a C₁₋₃₀ alkyl group that may be replaced with a fluorine atom. The alkyl group may be linear or branched. In one aspect, the C₁₋₃₀ alkyl group can be a C₁₋₂₀ alkyl group, preferably a Ci.₁₀ alkyl group, and more preferably a C₁₋₃ alkyl group.

R²¹ is preferably a group represented by -R²²-R²³ (in the formula, R²² is an unsubstituted C₁₋₃₀ alkylene group, preferably a C₁₋₂₀ alkylene group, and more preferably a C₁₋₁₀ alkylene group, and R²³ is a C₁₋₁₀ perfluoroalkyl group and preferably a C₁₋₆ perfluoroalkyl group).

The alkyl ether group in R is a compound having one or more ethereal oxygen atoms in a molecular chain of the alkyl group. Such an alkyl ether group is typically a group represented by -R²⁶-R²⁷-(O-R²⁸)ₘ-R²⁹. In the formula, R²⁶ is a single bond or an oxygen atom. R²⁷ is a single bond or a C₁₋₁₀ alkylene group. R²⁸ is a C₁₋₁₀ alkylene group. R²⁹ is a hydrogen atom or a C₁₋₁₀ alkyl group. m represents an integer of 1 to 20 and can be preferably 1 to 10, more preferably 1 to 5, and still more preferably 1 to 3.

In one aspect, the organic group can be an alkyl group, alkyloxy group, or alkyl ether group having an end replaced with a reactive functional group. Such a group may be replaced with another substituent.

The reactive functional group is not limited, and examples thereof include a hydroxyl group, an amino group, a carboxyl group, a thiol group, an isocyanate group, a vinyl group, an acetylene group, a nitrile group, an epoxy group, and the like.

In one aspect, R preferably represents a C₁₋₃₀ alkyl group that may have one or more substituents or a hydrogen atom.

n is 4 to 20, preferably 4 to 10, more preferably 4 to 7, and still more preferably 5 or 6. In one aspect, n is 5. In addition, in another aspect, n is 6.

The cyclic compound preferably comprises a compound represented by any of the following formulae (1) to (3): 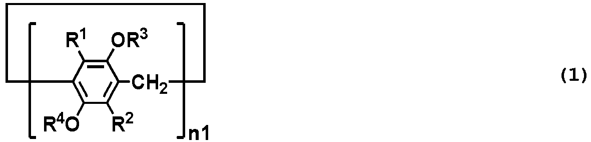 wherein
R¹ independently represents a hydrogen atom or an organic group ,
R² independently represents a hydrogen atom or an organic group ,
R³ independently represents a hydrogen atom or an organic group ,
R⁴ independently represents a hydrogen atom or an organic group ,
n1 is an integer of 4 to 20,
in a preferable aspect, one or more selected from R¹ to R⁴ is preferably a fluorine-containing organic group and more preferably an organic group comprising a C₂₋₆ fluoroalkyl group, and
in another preferable aspect, one or more selected from R³ and R⁴ is a hydrogen atom, and R³ and R⁴ can be more preferably hydrogen atoms, 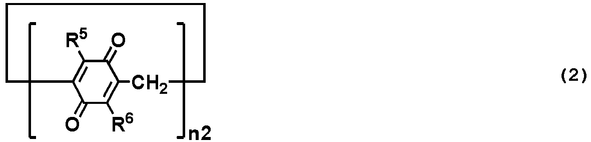
wherein
R⁵ independently represents a hydrogen atom or an organic group ,
R⁶ independently represents a hydrogen atom or an organic group , and
n2 is an integer of 4 to 20, and 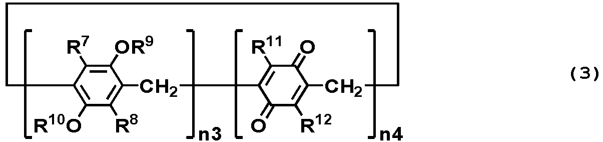 wherein
   R⁷ independently represents a hydrogen atom or an organic group ,
   R⁸ independently represents a hydrogen atom or an organic group ,
   R⁹ independently represents a hydrogen atom or an organic group ,
   R¹⁰ independently represents a hydrogen atom or an organic group ,
   R¹¹ independently represents a hydrogen atom or an organic group ,
   R¹² independently represents a hydrogen atom or an organic group ,
      n3 is an integer of 1 to 19,
   n4 is an integer of 1 to 19,
   the sum of n3 and n4 is 4 to 20, and
   the occurrence order of a unit in parentheses with n3 or n4 is arbitrary in the formula (3).

When the cyclic compound is a compound represented by any of the formulae (1) to (3), heat resistance and/or hydrophobicity are more favorable, introduction of a functional group is easier, and the composite can be more efficiently produced.

In one aspect, the cyclic compound preferably comprises a compound represented by the following formula (1): 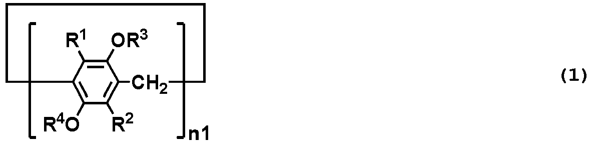 wherein
R¹ independently represents a hydrogen atom or an organic group ,
R² independently represents a hydrogen atom or an organic group ,
R³ independently represents a hydrogen atom or an organic group ,
R⁴ independently represents a hydrogen atom or an organic group , and
n1 is an integer of 4 to 20.

In the formula (1), R¹ independently represents a hydrogen atom or an organic group , R² independently represents a hydrogen atom or an organic group , R³ independently represents a hydrogen atom or an organic group , and R⁴ independently represents a hydrogen atom or an organic group .

Examples of the organic group represented by R¹, R², R³, or R⁴ include an alkyl group, an alkyloxy group, an alkyl ether group, a tosyl group, a triflate group, a phenyl group, a fluorine-containing organic group, and the like, and these groups may have one or more substituents.

The substituent that the organic group represented by R¹, R², R³, or R⁴ may have is not limited, and examples thereof include reactive functional groups such as a hydroxyl group, an amino group, a carboxy group, a thiol group, an isocyanate group, a nitrile group, an epoxy group, and an acetyl group; aliphatic hydrocarbon groups such as an alkyl group, a vinyl group, and an ethynyl group.

The alkyl group in R¹, R², R³, or R⁴ is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group in R¹, R², R³, or R⁴ include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

The alkyloxy group in R¹, R², R³, or R⁴ is typically a group represented by -OR²¹ (in the formula, R²¹ is an alkyl group that may have one or more substituents).

The alkyl group in R²¹ may be replaced with the above-described substituent and may be preferably replaced with a fluorine atom. Such an alkyl group is preferably a C₁₋₃₀ alkyl group that may be replaced with a fluorine atom. Such an alkyl group may be linear or branched. In one aspect, the C₁₋₃₀ alkyl group can be a C₁₋₂₀ alkyl group, preferably a Ci.₁₀ alkyl group, and more preferably a C₁₋₃ alkyl group.

The alkyl ether group in R¹, R², R³, or R⁴ is a compound having one or more ethereal oxygen atoms in a molecular chain of the alkyl group. Such an alkyl ether group is typically a group represented by -R²⁶-R²⁷-(O-R²⁸)m-R²⁹. In the formula, R²⁶ is a single bond or an oxygen atom. R²⁷ is a single bond or a C₁₋₁₀ alkylene group. R²⁸ is a C₁₋₁₀ alkylene group. R²⁹ is a hydrogen atom or a C₁₋₁₀ alkyl group. m represents an integer of 1 to 20 and can be preferably 1 to 10, more preferably 1 to 5, and still more preferably 1 to 3.

The fluorine-containing organic group in R¹, R², R³, or R⁴ can be preferably an organic group having 2 or more carbon atoms and having a fluoroalkyl group and more preferably a fluoroalkyl group or a fluoro(poly)ether group. The fluoroalkyl group is preferably a Ci.₁₀ fluoroalkyl group and more preferably a C₂₋₆ fluoroalkyl group. Such a fluoroalkyl group may be linear or branched but is preferably linear. Such a fluoroalkyl group is preferably a perfluoroalkyl group. The fluoro(poly)ether group represents a fluoroether group and/or a fluoropolyether group.

In one aspect, the fluorine-containing organic group is a group represented by the following formula:

-(Oₚ₁-R²⁰_{q1})-Rf^{a}

wherein
R²⁰ independently represents a C₁₋₁₀ alkylene group.
Rf^{a} represents a C₁₋₁₀ fluoroalkyl group.
p1 is an integer of 0 to 2.
q1 is an integer of 0 to 3.

In (Oₚ₁-R²⁰_{q1}), the occurrence order of O and R^{11a} is not limited.

The C₁₋₁₀ alkylene group in R²⁰ is preferably a C₁₋₆ alkylene group and more preferably a C₂₋₆ alkylene group. Such an alkylene group may be linear or branched but is preferably linear.

The C₁₋₁₀ fluoroalkyl group in Rf^{a} is preferably a C₁₋₆ fluoroalkyl group. Such a fluoroalkyl group may be linear or branched but is preferably linear. Such a fluoroalkyl group is preferably a perfluoroalkyl group.

p1 is an integer of 0 to 2 and preferably 1 or 2. In one aspect, p1 is 1. In another aspect, p1 is 2.

q1 is an integer of 0 to 3, preferably an integer of 1 to 3, and more preferably 1 or 2. In one aspect, q1 is 1. In another aspect, q1 is 2.

In a preferable aspect, the fluoro(poly)ether group is a group represented by

-O-R²⁰-(O-R²⁰)ᵣ₁-Rf^{a}

wherein
R²⁰ independently represents a C₁₋₁₀ alkylene group.
Rf^{a} represents a C₁₋₁₀ fluoroalkyl group.
r1 is 0 or 1.

In a more preferable aspect, the fluoro(poly)ether group is a group represented by

-O-R²⁰-(O-R²⁰)ᵣ₁-Rf^{a}

wherein
R²⁰ independently represents a C₁₋₁₀ alkylene group.
Rf^{a} represents a C₁₋₁₀ perfluoroalkyl group.
r1 is 0 or 1.

n1 is an integer of 4 to 20, preferably an integer of 4 to 6, and more preferably 5 or 6.

In a particularly preferable aspect,
R¹³ and R¹⁶ are -O-R²⁰-(O-R²⁰)ᵣ₁-Rf^{a}, and R¹⁴ and R¹⁵ are hydrogen atoms, or
R¹⁴ and R¹⁵ are -O-R²⁰-(O-R²⁰)ᵣ₁-Rf^{a}, and R¹³ and R¹⁶ are hydrogen atoms,
R²⁰ is independently a C₁₋₁₀ alkylene group and preferably a C₁₋₆ alkylene group,
Rf^{a} is a Ci.₁₀ perfluoroalkyl group and preferably a C₁₋₆ perfluoroalkyl group,
r1 is 0 or 1, and
n1 is an integer of 4 to 6 and preferably 5 or 6.

In one aspect, the organic group can be an alkyl group, alkyloxy group, or alkyl ether group having an end replaced with a reactive functional group. Such a group may be replaced with another substituent.

The reactive functional group is not limited, and examples thereof include a hydroxyl group, an amino group, a carboxyl group, a thiol group, an isocyanate group, a vinyl group, an acetylene group, a nitrile group, an epoxy group, and the like.

In one aspect, it is preferable that R¹ represents a C₁₋₃₀ alkyl group that may have one or more substituents or a hydrogen atom, R² represents a C₁₋₃₀ alkyl group that may have one or more substituents or a hydrogen atom, R³ represents a C₁₋₃₀ alkyl group that may have one or more substituents or a hydrogen atom, and R⁴ represents a C₁₋₃₀ alkyl group that may have one or more substituents or a hydrogen atom.

In a preferable aspect, one or more selected from R¹ to R⁴ is preferably a fluorine-containing organic group and more preferably an organic group comprising a C₂₋₆ fluoroalkyl group.

In another preferable aspect, one or more selected from R³ and R⁴ is a hydrogen atom, and R³ and R⁴ can be more preferably hydrogen atoms.

n1 is preferably 4 to 20, more preferably 4 to 10, still more preferably 4 to 7, and far still more preferably 5 or 6. In one aspect, n1 is 5. In addition, in another aspect, n1 is 6.

The formula (1) is preferably represented by the following formula (1-A): 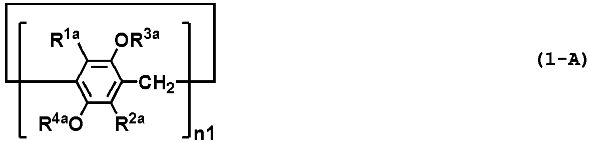 wherein
R^{1a} independently represents a C₁₋₃₀ alkyl group that may have one or more substituents or a hydrogen atom,
R^{2a} independently represents a C₁₋₃₀ alkyl group that may have one or more substituents or a hydrogen atom,
R^{3a} independently represents a C₁₋₃₀ alkyl group that may have one or more substituents or a hydrogen atom,
R^{4a} independently represents a C₁₋₃₀ alkyl group that may have one or more substituents or a hydrogen atom, and
n1 is an integer of 4 to 20.

In the formula (1-A), R^{1a} independently represents a C₁₋₃₀ alkyl group that may have one or more substituents or a hydrogen atom, R^{2a} independently represents a C₁₋₃₀ alkyl group that may have one or more substituents or a hydrogen atom, R^{3a} independently represents a C₁₋₃₀ alkyl group that may have one or more substituents or a hydrogen atom, and R^{4a} independently represents a C₁₋₃₀ alkyl group that may have one or more substituents or a hydrogen atom .

The alkyl group represented by R^{1a}, R^{2a}, R^{3a}, or R^{4a} is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group represented by R^{1a}, R^{2a}, R^{3a}, or R^{4a} include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

In another aspect, the formula (1) can be represented by the following formula (1-A'): 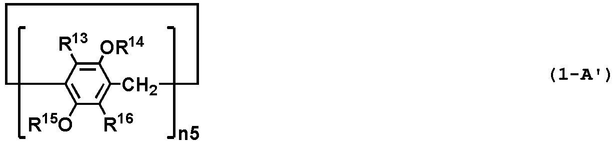 wherein
R¹³ independently represents a hydrogen atom or an organic group ,
R¹⁴ independently represents a hydrogen atom or an organic group ,
R¹⁵ independently represents a hydrogen atom or an organic group ,
R¹⁶ independently represents a hydrogen atom or an organic group ,
n5 is an integer of 4 to 20,
provided that at least one of R¹³, R¹⁴, R¹⁵, and R¹⁶ is a fluorine-containing group, and
at least one of R¹⁴ and R¹⁵ is a hydrogen atom.

In the formula (1-A'), R¹³ independently represents a hydrogen atom or an organic group , R¹⁴ independently represents a hydrogen atom or an organic group , R¹⁵ independently represents a hydrogen atom or an organic group , R¹⁶ independently represents a hydrogen atom or an organic group , and at least one of R¹³, R¹⁴, R¹⁵, and R¹⁶ is a fluorine-containing organic group.

Examples of the organic group represented by R¹³, R¹⁴, R¹⁵, or R¹⁶ include an alkyl group, an alkyloxy group, an alkyl ether group, a tosyl group, a triflate group, a phenyl group, and the like that may be replaced with a substituent.

The substituent is not limited, and examples thereof include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, 5 to 10-membered unsaturated heterocyclyl groups, C₆₋₁₀ aryl groups, and 5 to 10-membered heteroaryl groups, and reactive functional groups that may be replaced with one or more halogen atoms.

The reactive functional group is not limited, and examples thereof include a hydroxyl group, an amino group, a carboxyl group, a thiol group, an isocyanate group, a vinyl group, an acetylene group, a nitrile group, an epoxy group, and the like.

The alkyl group in R¹³, R¹⁴, R¹⁵, or R¹⁶ is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group in R¹³, R¹⁴, R¹⁵, or R¹⁶ include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

The alkyloxy group in R¹³, R¹⁴, R¹⁵, or R¹⁶ is typically a group represented by - O-R²¹ (in the formula, R²¹ is an alkyl group that may have one or more substituents).

The alkyl group in R²¹ may be replaced with the above-described substituent and may be preferably replaced with a fluorine atom. Such an alkyl group is preferably a C₁₋₃₀ alkyl group that may be replaced with a fluorine atom. Such an alkyl group may be linear or branched. In one aspect, the C₁₋₃₀ alkyl group can be a C₁₋₂₀ alkyl group, preferably a Ci.₁₀ alkyl group, and more preferably a C₁₋₃ alkyl group.

R²¹ is preferably a group represented by -R²²-R²³ (in the formula, R²² is an unsubstituted C₁₋₃₀ alkylene group, preferably a C₁₋₂₀ alkylene group, and more preferably a C₁₋₁₀ alkylene group, and R²³ is a C₁₋₁₀ perfluoroalkyl group and preferably a C₁₋₆ perfluoroalkyl group).

The alkyl ether group is a compound having one or more ethereal oxygen atoms in a molecular chain of the alkyl group. Such an alkyl ether group is typically a group represented by -R ^{26f}-R ^{27f}-(O-R^{28f})ₘ₁-R^{29f}. In the formula, R^{26f} is a single bond or an oxygen atom. R^{27f} is a single bond or a C₁₋₁₀ alkylene group. R^{28f} is a C₁₋₁₀ alkylene group. R^{29f} is a C₁₋₁₀ alkyl group that may be replaced with a fluorine atom or a hydrogen atom. m1 represents an integer of 1 to 20 and can be preferably 1 to 10, more preferably 1 to 5, and still more preferably 1 to 3.

In one aspect, the organic group can be an alkyl group, alkyloxy group, or alkyl ether group having an end replaced with a reactive functional group. Such a group may be replaced with another substituent.

In one aspect, R¹³ and R¹⁶ are each independently an organic group and at least one of R¹³ and R¹⁶ is a fluorine-containing organic group or R¹⁴ and R¹⁵ are each independently an organic group and at least one of R¹⁴ and R¹⁵ is a fluorine-containing organic group.

At least one of R¹⁴ and R¹⁵ is a hydrogen atom, and R¹⁴ and R¹⁵ can be preferably hydrogen atoms. In a case where at least one of R¹⁴ and R¹⁵ is a hydrogen atom, the compound represented by the formula (1-A') has -OH as a proton-donating group. Therefore, the compound can be combined with the polymer comprising one or more selected from -CO-, a nitrogen atom, and a halogen atom.

In one aspect, at least two of R¹³, R¹⁴, R¹⁵, and R¹⁶ are fluorine-containing organic groups, two of R¹³, R¹⁴, R¹⁵, and R¹⁶ are preferably fluorine-containing organic groups, and R¹³ and R¹⁶ can be more preferably fluorine-containing organic groups.

In one aspect, R¹⁴ and R¹⁵ are hydrogen atoms or R¹³ and R16 are hydrogen atoms.

In a preferable aspect, R¹³ and R¹⁶ are each independently a fluorine-containing organic group, and R¹⁴ and R¹⁵ are hydrogen atoms.

The fluorine-containing organic group can be preferably an organic group having 2 or more carbon atoms and having a fluoroalkyl group and more preferably a fluoroalkyl group or a fluoro(poly)ether group. The fluoroalkyl group is preferably a C₁₋₁₀ fluoroalkyl group and more preferably a C₂₋₆ fluoroalkyl group. Such a fluoroalkyl group may be linear or branched but is preferably linear. Such a fluoroalkyl group is preferably a perfluoroalkyl group. The fluoro(poly)ether group represents a fluoroether group and/or a fluoropolyether group.

In one aspect, the fluorine-containing organic group is a group represented by the following formula:

-(Oₚ₁-R²⁰_{q1})-Rf^{a}

[in the formula:
R²⁰ independently represents a C₁₋₁₀ alkylene group.
Rf^{a} represents a C₁₋₁₀ fluoroalkyl group.
p1 is an integer of 0 to 2.
q1 is an integer of 0 to 3.

In (Oₚ₁-R²⁰_{q1}), the occurrence order of O and R^{11a} is not limited].

The Ci.₁₀ alkylene group in R²⁰ is preferably a C₁₋₆ alkylene group and more preferably a C₂₋₆ alkylene group. Such an alkylene group may be linear or branched but is preferably linear.

The C₁₋₁₀ fluoroalkyl group in Rf^{a} is preferably a C₁₋₆ fluoroalkyl group. Such a fluoroalkyl group may be linear or branched but is preferably linear. Such a fluoroalkyl group is preferably a perfluoroalkyl group.

p1 is an integer of 0 to 2 and preferably 1 or 2. In one aspect, p1 is 1. In another aspect, p1 is 2.

q1 is an integer of 0 to 3, preferably an integer of 1 to 3, and more preferably 1 or 2. In one aspect, q1 is 1. In another aspect, q1 is 2.

In a preferable aspect, the fluoro(poly)ether group is a group represented by

-O-R²⁰-(O-R²⁰)ᵣ₁-Rf^{a}

[in the formula:
R²⁰ independently represents a C₁₋₁₀ alkylene group.
Rf^{a} represents a C₁₋₁₀ fluoroalkyl group.
r1 is 0 or 1.].

In a more preferable aspect, the fluoro(poly)ether group is a group represented by

-O-R²⁰-(O-R²⁰)ᵣ₁-Rf^{a}

[in the formula:
R²⁰ independently represents a C₁₋₁₀ alkylene group.
Rf^{a} represents a C₁₋₁₀ perfluoroalkyl group.
r1 is 0 or 1.].

n1 is an integer of 4 to 20, preferably an integer of 4 to 6, and more preferably 5 or 6.

In a particularly preferable aspect,
R¹³ and R¹⁶ are -O-R²⁰-(O-R²⁰)ᵣ₁-Rf^{a}, and R¹⁴ and R¹⁵ are hydrogen atoms, or
R¹⁴ and R¹⁵ are -O-R²⁰-(O-R²⁰)ᵣ₁-Rf^{a}, and R¹³ and R¹⁶ are hydrogen atoms,
R²⁰ is independently a Ci.₁₀ alkylene group and preferably a C₁₋₆ alkylene group,
Rf^{a} is a Ci.₁₀ perfluoroalkyl group and preferably a C₁₋₆ perfluoroalkyl group,
r1 is 0 or 1, and
n1 is an integer of 4 to 6 and preferably 5 or 6.

The compound represented by the formula (1-A') can be obtained by converting a substituent in pillar[n]arene into a fluorine-containing organic group. Typically, the compound represented by the formula (1-A') can be obtained by introducing a hydroxyl group into a predetermined position in pillar[n]arene and reacting the hydroxyl group and a tosylate, halide, or the like of an organic group having 2 or more carbon atoms and having a fluoroalkyl group.

In one aspect, it is preferable that R^{1a} and R^{2a} are hydrogen atoms and R^{3a} and R^{4a} are hydrogen atoms or methyl groups.

In another aspect, the cyclic compound preferably comprises a compound represented by the following formula (2): 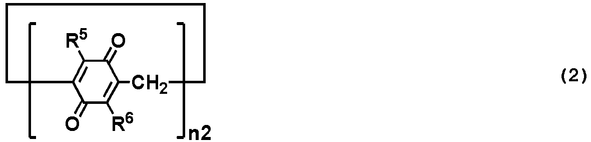 wherein
R⁵ independently represents a hydrogen atom or an organic group ,
R⁶ independently represents a hydrogen atom or an organic group , and
n2 is an integer of 4 to 20.

In the formula (2), R⁵ independently represents a hydrogen atom or an organic group , and R⁶ independently represents a hydrogen atom or an organic group .

Examples of the organic group represented by R⁵ or R⁶ include an alkyl group, an alkyloxy group, an alkyl ether group, a tosyl group, a triflate group, a phenyl group, and the like, and these groups may have one or more substituents.

The substituent that the organic group represented by R⁵ or R⁶ may have is not limited, and examples thereof include reactive functional groups such as a hydroxyl group, an amino group, a carboxy group, a thiol group, an isocyanate group, a nitrile group, an epoxy group, and an acetyl group; aliphatic hydrocarbon groups such as an alkyl group, a vinyl group, and an ethynyl group.

The alkyl group in R⁵ or R⁶ is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group in R⁵ or R⁶ include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

The alkyloxy group in R⁵ or R⁶ is typically a group represented by -O-R²¹ (in the formula, R²¹ is an alkyl group that may have one or more substituents).

The alkyl group in R²¹ may be replaced with the above-described substituent and may be preferably replaced with a fluorine atom. Such an alkyl group is preferably a C₁₋₃₀ alkyl group that may be replaced with a fluorine atom. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃ alkyl group.

The alkyl ether group in R⁵ or R⁶ is a compound having one or more ethereal oxygen atoms in a molecular chain of the alkyl group. Such an alkyl ether group is typically a group represented by -R²⁶-R²⁷-(O-R²⁸)m-R²⁹. In the formula, R²⁶ is a single bond or an oxygen atom. R²⁷ is a single bond or a C₁₋₁₀ alkylene group. R²⁸ is a C₁₋₁₀ alkylene group. R²⁹ is a hydrogen atom or a C₁₋₁₀ alkyl group. m represents an integer of 1 to 20 and can be preferably 1 to 10, more preferably 1 to 5, and still more preferably 1 to 3.

In one aspect, the organic group can be an alkyl group, alkyloxy group, or alkyl ether group having an end replaced with a reactive functional group. Such a group may be replaced with another substituent.

The reactive functional group is not limited, and examples thereof include a hydroxyl group, an amino group, a carboxyl group, a thiol group, an isocyanate group, a vinyl group, an acetylene group, a nitrile group, an epoxy group, and the like.

In one aspect, it is preferable that R⁵ represents a C₁₋₃₀ alkyl group that may have one or more substituents or a hydrogen atom and R⁶ represents a C₁₋₃₀ alkyl group that may have one or more substituents or a hydrogen atom.

n2 is preferably 4 to 20, more preferably 4 to 10, still more preferably 4 to 7, and far still more preferably 5 or 6. In one aspect, n2 is 5. In addition, in another aspect, n2 is 6.

The formula (2) is preferably represented by the following formula (2-A): 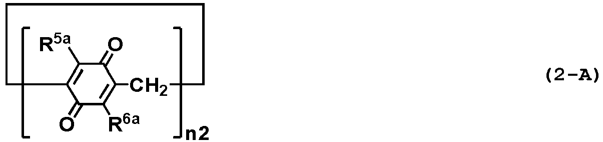 wherein
R^{5a} independently represents a C₁₋₃₀ alkyl group that may have one or more substituents or a hydrogen atom,
R^{6a} independently represents a C₁₋₃₀ alkyl group that may have one or more substituents or a hydrogen atom, and
n2 is an integer of 4 to 20.

In the formula (2-A), R^{5a} independently represents a C₁₋₃₀ alkyl group that may have one or more substituents or a hydrogen atom, and R^{6a} independently represents a C₁₋₃₀ alkyl group that may have one or more substituents or a hydrogen atom .

The alkyl group in R^{5a} or R^{6a} is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group represented by R^{5a} or R^{6a} include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

In one aspect, R^{5a} and R^{6a} are preferably hydrogen atoms.

Furthermore, in another aspect, the cyclic compound preferably comprises a compound represented by the following formula (3): 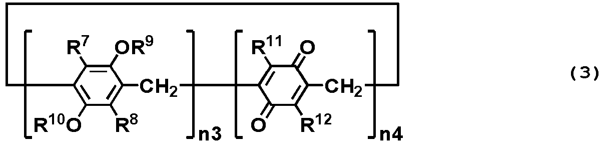 wherein
R⁷ independently represents a hydrogen atom or an organic group ,
R⁸ independently represents a hydrogen atom or an organic group ,
R⁹ independently represents a hydrogen atom or an organic group ,
R¹⁰ independently represents a hydrogen atom or an organic group ,
R¹¹ independently represents a hydrogen atom or an organic group ,
R¹² independently represents a hydrogen atom or an organic group ,
n3 is an integer of 1 to 19,
n4 is an integer of 1 to 19,
the sum of n3 and n4 is 4 to 20, and
the occurrence order of a unit in parentheses with n3 or n4 is arbitrary in the formula (3).

In the formula (3), R⁷ independently represents a hydrogen atom or an organic group , R⁸ independently represents a hydrogen atom or an organic group , R⁹ independently represents a hydrogen atom or an organic group , R¹⁰ independently represents a hydrogen atom or an organic group , R¹¹ independently represents a hydrogen atom or an organic group , and R¹² independently represents a hydrogen atom or an organic group .

Examples of the organic group represented by R⁷, R⁸, R⁹, R¹⁰, R¹¹ or R¹² include an alkyl group, an alkyloxy group, an alkyl ether group, a tosyl group, a triflate group, a phenyl group, and the like, and these groups may have one or more substituents.

The substituent that the organic group represented by R⁷, R⁸, R⁹, R¹⁰, R¹¹ or R¹² may have is not limited, and examples thereof include reactive functional groups such as a hydroxyl group, an amino group, a carboxy group, a thiol group, an isocyanate group, a nitrile group, an epoxy group, and an acetyl group; aliphatic hydrocarbon groups such as an alkyl group, a vinyl group, and an ethynyl group.

The alkyl group in R⁷, R⁸, R⁹, R¹⁰, R¹¹ or R¹² is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group in R⁷, R⁸, R⁹, R¹⁰, R¹¹ or R¹² include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

The alkyloxy group in R⁷, R⁸, R⁹, R¹⁰, R¹¹ or R¹² is typically a group represented by -O-R²¹ (in the formula, R²¹ is an alkyl group that may have one or more substituents).

The alkyl group in R²¹ may be replaced with the above-described substituent and may be preferably replaced with a fluorine atom. Such an alkyl group is preferably a C₁₋₃₀ alkyl group that may be replaced with a fluorine atom. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃ alkyl group.

The alkyl ether group in R⁷, R⁸, R⁹, R¹⁰, R¹¹ or R¹² is a compound having one or more ethereal oxygen atoms in a molecular chain of the alkyl group. Such an alkyl ether group is typically a group represented by -R²⁶-R²⁷ -(O-R²⁸)ₘ-R²⁹. In the formula, R²⁶ is a single bond or an oxygen atom. R²⁷ is a single bond or a C₁₋₁₀ alkylene group. R²⁸ is a C₁₋₁₀ alkylene group. R²⁹ is a hydrogen atom or a C₁₋₁₀ alkyl group. m represents an integer of 1 to 20 and can be preferably 1 to 10, more preferably 1 to 5, and still more preferably 1 to 3.

In one aspect, the organic group represented by R⁷, R⁸, R⁹, R¹⁰, R¹¹ or R¹² can be an alkyl group, alkyloxy group, or alkyl ether group having an end replaced with a reactive functional group. Such a group may be replaced with another substituent.

The reactive functional group is not limited, and examples thereof include a hydroxyl group, an amino group, a carboxyl group, a thiol group, an isocyanate group, a vinyl group, an acetylene group, a nitrile group, an epoxy group, and the like.

In one aspect, it is preferable that R⁷ represents a C₁₋₃₀ alkyl group that may have one or more substituents or a hydrogen atom, R⁸ represents a C₁₋₃₀ alkyl group that may have one or more substituents or a hydrogen atom, R⁹ represents a C₁₋₃₀ alkyl group that may have one or more substituents or a hydrogen atom, R¹⁰ represents a C₁₋₃₀ alkyl group that may have one or more substituents or a hydrogen atom, R¹¹ represents a C₁₋₃₀ alkyl group that may have one or more substituents or a hydrogen atom, and R¹² represents a C₁₋₃₀ alkyl group that may have one or more substituents or a hydrogen atom.

n3 is preferably 1 to 19, more preferably 1 to 9, still more preferably 1 to 6, and far still more preferably 1 to 5. n4 is preferably 1 to 19, more preferably 1 to 9, still more preferably 1 to 6, and far still more preferably 1 to 5. n3 + n4 is preferably 4 to 20, more preferably 4 to 10, still more preferably 4 to 7, and far still more preferably 5 or 6.

The formula (3) is preferably represented by the following formula (3-A): 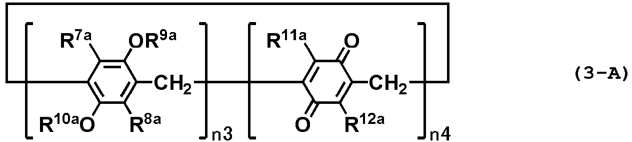 wherein
R^{7a} independently represents a C₁₋₃₀ alkyl group that may have one or more substituents or a hydrogen atom,
R^{8a} independently represents a C₁₋₃₀ alkyl group that may have one or more substituents or a hydrogen atom,
R^{9a} independently represents a C₁₋₃₀ alkyl group that may have one or more substituents or a hydrogen atom,
R^{10a} independently represents a C₁₋₃₀ alkyl group that may have one or more substituents or a hydrogen atom,
R^{11a} independently represents a C₁₋₃₀ alkyl group that may have one or more substituents or a hydrogen atom,
R^{12a} independently represents a C₁₋₃₀ alkyl group that may have one or more substituents or a hydrogen atom,
n3 is an integer of 1 to 19,
n4 is an integer of 1 to 19,
the sum of n3 and n4 is 4 to 20, and
provided that the occurrence order of a unit in parentheses with n3 or n4 is arbitrary in the formula (3-A)].

In the formula (3-A), R^{7a} independently represents a C₁₋₃₀ alkyl group that may have one or more substituents or a hydrogen atom, R^{8a} independently represents a C₁₋₃₀ alkyl group that may have one or more substituents or a hydrogen atom, R^{9a} independently represents a C₁₋₃₀ alkyl group that may have one or more substituents or a hydrogen atom, R^{10a} independently represents a C₁₋₃₀ alkyl group that may have one or more substituents or a hydrogen atom , R^{11a} independently represents a C₁₋₃₀ alkyl group that may have one or more substituents or a hydrogen atom, and R^{12a} independently represents a C₁₋₃₀ alkyl group that may have one or more substituents or a hydrogen atom .

The alkyl group represented by R^{7a}, R^{8a}, R^{9a}, R^{10a}, R^{11a}, or R^{12a} is preferably a C₁₋₃₀ alkyl group. Such an alkyl group may be linear or branched. In one aspect, the C₁₋₃₀ alkyl group can be a C₁₋₂₀ alkyl group, preferably a C₁₋₁₀ alkyl group, and more preferably a C₁₋₃₀ alkyl group. In another aspect, the C₁₋₃₀ alkyl group can be a C₁₇₋₃₀ alkyl group, preferably a C₁₈₋₃₀ alkyl group, and more preferably a C₂₆₋₃₀ alkyl group.

Examples of the substituent in the alkyl group represented by R^{7a}, R^{8a}, R^{9a}, R^{10a}, R^{11a}, or R^{12a} include halogen atoms; one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5 to 10-membered heterocyclyl groups, C₆₋₁₀ aryl groups, and 5 to 10-membered heteroaryl groups that may be replaced with one or more halogen atoms.

In one aspect, R^{7a}, R^{8a}, R^{9a}, R^{10a}, R^{11a}, and R^{12a} are preferably hydrogen atoms.

The above cyclic compound is preferably a compound represented by one or more selected from the group consisting of the formulae (1), (2), and (3), and may more preferably be a compound represented by one or more selected from the group consisting of the formulae (1-A), (2-A), and (3-A).

When two or more cyclic compounds are contained in the above composite, these two or more cyclic compounds may be the same or different from one another.

The proportion of the above cyclic compound may preferably be 0.01 mass% or more and 99 mass% or less, more preferably 0.1 mass% or more and 95 mass% or less, and sill more preferably 1 mass% or more and 90 mass% or less in a total of 100 parts by mass of the fluorine-containing polymer and the cyclic compound described below. When the proportion of the cyclic compound falls within the range, the heat resistance and/or the hydrophobicity of the composite are/is favorable.

The fluorine-containing polymer needs to be a polymer comprising a fluorine atom and may have one or more substituents. The fluorine-containing polymer can be preferably a linear fluorine-containing polymer that may have one or more substituents. When the fluorine-containing polymer is linear, it becomes easy for the fluorine-containing polymer to penetrate through the inside of the ring of the cyclic compound, and formation of the composite can be easy.

The above polymer may preferably be a linear polymer. When the above polymer is linear, the polymer easily penetrates through the inside of the ring of the cyclic compound, which may result in easy formation of a composite.

In the present disclosure, for example, the above polymer may have one or more substituents. Examples of the substituent that may be contained in the above fluorine-containing polymer include one or more selected from the group consisting of - COOR^{f13} , -OR^{f13}, -NR^{f13}₂, -NR^{f13}-CO-R^{f13} , -CO-NR^{f13}₂, -NO₂, -CN, -COR¹⁴, -SO₂R^{f14}, - O-COR^{f14}, a C₁₋₅ alkyl group optionally substituted with one or more halogen atoms, and a halogen atom. The number of carbon atoms in such a substituent can be preferably 1 or more and 5 or less and more preferably 1 or more and 3 or less.

R^{f13} independently represents a C₁₋₄ alkyl group optionally substituted with one or more halogen atoms or a hydrogen atom .

The "C₁₋₄ alkyl group" in the C₁₋₄ alkyl group optionally substituted with one or more halogen atoms represented by R^{f13} may be linear or branched, and is preferably a linear or branched C₁₋₃ alkyl group, and more preferably a linear C₁₋₃ alkyl group.

Examples of the halogen atom that may substitute the above C₁₋₄ alkyl group represented by R^{f13} include a fluorine atom, a chlorine atom, a bromine atom, and an iodine atom, and a fluorine atom or a chlorine atom is preferable.

In one aspect, the above C₁₋₄ alkyl group optionally substituted with one or more halogen atoms represented by R^{f13} is preferably a C₁₋₄ alkyl group substituted with one or more halogen atoms, sill more preferably a C₁₋₄ alkyl group substituted with one or more fluorine atoms, and even more preferably a C₁₋₄ perfluoroalkyl group.

For example, the above C₁₋₄ perfluoroalkyl group in R^{f13} may be linear or branched, and is preferably a linear or branched C₁₋₃ perfluoroalkyl group, more preferably a linear C₁₋₃ perfluoroalkyl group, and specifically, CF₃-, CF₃CF₂-, or CF₃CF₂CF₂-.

R^{fl4} independently represents a C₁₋₄ alkyl group optionally substituted with one or more fluorine atoms, a hydrogen atom, or a halogen atom .

The "C₁₋₄ alkyl group" in the C₁₋₄ alkyl group optionally substituted with one or more halogen atoms represented by R^{f14} may be linear or branched, and is preferably a linear or branched C₁₋₃ alkyl group, and more preferably a linear C₁₋₃ alkyl group.

Examples of the above halogen atom that may substitute the C₁₋₄ alkyl group represented by R^{fl4} include a fluorine atom, a chlorine atom, a bromine atom, and an iodine atom, and a fluorine atom or a chlorine atom is preferable.

In one aspect, the above C₁₋₄ alkyl group optionally substituted with one or more halogen atoms represented by R^{fl4} is preferably a C₁₋₄ alkyl group substituted with one or more halogen atoms, sill more preferably a C₁₋₄ alkyl group substituted with one or more fluorine atoms, and even more preferably a C₁₋₄ perfluoroalkyl group.

For example, the above C₁₋₄ perfluoroalkyl group in R^{fl4} may be linear or branched, and is preferably a linear or branched C₁₋₃ perfluoroalkyl group, more preferably a linear C₁₋₃ perfluoroalkyl group, and specifically, -CF₃, -CF₂CF₃, or - CF₂CF₂CF₃.

The "C₁₋₅ alkyl group" in the above C₁₋₅ alkyl group optionally substituted with one or more halogen atoms as the substituent may be linear or branched, and is preferably a linear or branched C₁₋₃ alkyl group, and more preferably a linear C₁₋₃ alkyl group.

Examples of the halogen atom that may substitute the above C₁₋₅ alkyl group as the substituent include a fluorine atom, a chlorine atom, a bromine atom, and an iodine atom, and a fluorine atom or a chlorine atom is preferable. In one aspect, the above C₁₋₅ alkyl group optionally substituted with one or more halogen atoms is preferably a C₁₋₅ alkyl group substituted with one or more halogen atoms, sill more preferably a C₁₋₅ alkyl group substituted with one or more fluorine atoms, and even more preferably C₁₋₄ perfluoroalkyl group.

For example, the above C₁₋₄ perfluoroalkyl group may be linear or branched, and is preferably a linear or branched C₁₋₃ perfluoroalkyl group, more preferably a linear C₁₋₃ perfluoroalkyl group, and specifically, CF₃-, CF₃CF₂-, or CF₃CF₂CF₂-.

Examples of the above halogen atom as the substituent include a fluorine atom, a chlorine atom, an iodine atom, and a bromine atom, and a fluorine atom or a chlorine atom is preferable.

Examples of the fluorine-containing polymer include fluorine-containing olefin-based polymers, fluorine polyethers, fluorine-containing acrylic polymers, and the like. The above fluorine-containing polymer may preferably comprise one or more selected from the group consisting of fluorine-containing olefin-based polymers and fluoropolyethers.

The fluorine-containing olefin-based polymer may be a polymer of a fluorine-containing olefin compound, and has one or more repeating units formed from the fluorine-containing olefin compound.

The above fluorine-containing olefin compound is preferably represented by the following formula:

CR^{f20}R^{f21}=CR^{f22}R^{f23}

wherein
R^{f20} represents one selected from the group consisting of a hydrogen atom, a fluorine atom, a chlorine atom, a C₁₋₅ fluoroalkyl group, and a C₁₋₅ perfluoroalkoxy group,
R^{f21} represents one selected from the group consisting of a hydrogen atom, a fluorine atom, a chlorine atom, a C₁₋₅ fluoroalkyl group, and a C₁₋₅ perfluoroalkoxy group,
R^{f22} represents one selected from the group consisting of a hydrogen atom, a fluorine atom, a chlorine atom, a C₁₋₅ fluoroalkyl group, and a C₁₋₅ perfluoroalkoxy group,
R^{f23} represents one selected from the group consisting of a hydrogen atom, a fluorine atom, a chlorine atom, a C₁₋₅ fluoroalkyl group, and a C₁₋₅ perfluoroalkoxy group, and
one or more of R^{f20} to R^{f23} are fluorine atoms.

In the above formula, R^{f20} represents one selected from the group consisting of a hydrogen atom, a fluorine atom, a chlorine atom, a C₁₋₅ fluoroalkyl group, and a C₁₋₅ perfluoroalkoxy group, R^{f21} represents one selected from the group consisting of a hydrogen atom, a fluorine atom, a chlorine atom, a C₁₋₅ fluoroalkyl group, and a C₁₋₅ perfluoroalkoxy group, R^{f22} represents one selected from the group consisting of a hydrogen atom, a fluorine atom, a chlorine atom, a C₁₋₅ fluoroalkyl group, and a C₁₋₅ perfluoroalkoxy group, and R^{f23} represents one selected from the group consisting of a hydrogen atom, a fluorine atom, a chlorine atom, a C₁₋₅ fluoroalkyl group, and a C₁₋₅ perfluoroalkoxy group.

For example, the C₁₋₅ fluoroalkyl group represented by R^{f20}, R^{f21}, R^{f22}, or R^{f23} may be linear or branched, preferably a linear or branched C₁₋₅ fluoroalkyl group, in particular, a C₁₋₃ fluoroalkyl group, and more preferably a linear C₁₋₃ fluoroalkyl group. In one aspect, the C₁₋₅ fluoroalkyl group represented by R^{f20}, R^{f21}, R^{f22}, or R^{f23} is preferably a C₁₋₅ perfluoroalkyl group. For example, the above C₁₋₅ perfluoroalkyl group may be linear or branched, preferably a linear or branched C₁₋₅ perfluoroalkyl group, in particular, a C₁₋₃ perfluoroalkyl group, and more preferably a linear C₁₋₃ perfluoroalkyl group. Specific examples of the C₁₋₅ fluoroalkyl group represented by R^{f20}, R^{f21}, R^{f22}, or R^{f23} include -CF₃, -CF₂CF₃, or -CF₂CF₂CF₃.

For example, the C₁₋₅ perfluoroalkoxy group represented by R^{f20}, R^{f21}, R^{f22}, or R^{f23} may be linear or branched, and is preferably a linear or branched C₁₋₅ perfluoroalkoxy group, in particular, C₁₋₃ perfluoroalkoxy group, more preferably a linear perfluoroalkoxy group, and specifically, -O-CF₃, -O-CF₂CF₃, or -O-CF₂CF₂CF₃.

In one aspect, R^{f20} may preferably be a fluorine atom or a hydrogen atom, R^{f21} may preferably be a fluorine atom or a hydrogen atom, R^{f22} may preferably be a fluorine atom or a hydrogen atom, and R^{f23} may preferably be a fluorine atom or a hydrogen atom. In another aspect, R^{f20} may preferably be a fluorine atom or a hydrogen atom, R^{f21} may preferably be a fluorine atom or a hydrogen atom, R^{f22} may preferably be a fluorine atom or a hydrogen atom, and R^{f23} may preferably be a C₁₋₅ perfluoroalkyl group or a C₁₋₅ perfluoroalkoxy group.

The above fluorine-containing olefin compound preferably comprises one or more selected from the group consisting of tetrafluoroethylene, trifluoroethylene, vinylidene fluoride, chlorotrifluoroethylene, 1,2-difluoroethylene, hexafluoropropylene, 2,3,3,3-tetrafluoropropene, vinyl fluoride, perfluoromethyl vinyl ether, perfluoroethyl vinyl ether, and perfluoropropyl vinyl ether.

In one aspect, the above fluorine-containing olefin compound may preferably be vinylidene fluoride.

Examples of the above fluorine-containing olefin-based polymer include one or more selected from the group consisting of a chlorotrifluoroethylene/tetrafluoroethylene/perfluoro(alkyl vinyl ether) copolymer, an ethylene/tetrafluoroethylene copolymer, an ethylene/chlorotrifluoroethylene copolymer, polyvinylidene fluoride, a vinylidene fluoride/tetrafluoroethylene copolymer, a vinylidene fluoride/tetrafluoroethylene/chlorotrifluoroethylene copolymer, polychlorotrifluoroethylene, a vinylidene fluoride/hexafluoropropylene copolymer, a vinylidene fluoride/tetrafluoroethylene/hexafluoropropylene copolymer, and poly 1,2-difluoroethylene. In one aspect, the fluorine-containing olefin-based polymer comprises one or more selected from polyvinylidene fluoride, vinylidene fluoride/tetrafluoroethylene copolymers, vinylidene fluoride/tetrafluoroethylene/chlorotrifluoroethylene copolymers, vinylidene fluoride/hexafluoropropylene copolymers, vinylidene fluoride/tetrafluoroethylene/hexafluoropropylene copolymers, and poly 1,2-difluoroethylene.

The number average molecular weight of the above fluorine-containing olefin-based polymer may preferably be 1,000 or more and 1,000,000 or less, more preferably 2,000 or more and 500,000 or less, and sill more preferably 3,000 or more and 300,000 or less.

In the present disclosure, the number average molecular weight of the fluorine-containing olefin-based polymer can be measured by gel permeation chromatography in terms of polystyrene as the standard sample.

The above fluoropolyether may be a polymer having an oxyfluoroalkylene unit. The above fluoropolyether is preferably represented by the following formula:

Y¹-R^{f1}-R^{F}-O_{q}-R^{f2}-Y²

wherein
R^{F} represents a divalent fluoropolyether group,
Y¹ represents one selected from the group consisting of a halogen atom, a hydrogen atom, -COOR^{f3}, -OR^{f3}, -NR^{f3}₂, -NR^{f3}-CO-R^{f3}, -CO-NR^{f3}₂, -NO₂, -CN, - COR^{f4}, -SO₂R^{f4}, and -O-COR^{f4},
Y² represents one selected from the group consisting of a halogen atom, a hydrogen atom, -COOR^{f3}, -OR^{f3}, -NR^{f3}₂, -NR^{f3}-CO-R^{f3}, -CO-NR^{f3}₂, -NO₂, -CN, - COR^{f4}, -SO₂R^{f4}, and -O-COR^{f4},
R^{f1} represents a divalent hydrocarbon group optionally having one or more substituents or a single bond,
R^{f2} represents a divalent hydrocarbon group optionally having one or more substituents or a single bond,
R^{f3} independently represents a C₁₋₁₆ alkyl group optionally having one or more substituents or a hydrogen atom,
R^{f4} independently represents a C₁₋₁₆ alkyl group optionally having one or more substituents, a hydrogen atom, or a halogen atom, and
q is 0 or 1.

R^{F} is preferably a group represented by the formula:

-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

wherein
R^{Fa} is independently a hydrogen atom, a fluorine atom, or a chlorine atom ,
a, b, c, d, e, and f are each independently an integer of 0 to 200, and the sum of a, b, c, d, e, and f is 1 or more. The occurrence order of the respective repeating units in parentheses with a, b, c, d, e, or f is arbitrary in the formula. Provided that, when all of R^{Fa} are hydrogen atoms or chlorine atoms, at least one of a, b, c, d, e, and f is 1 or more.

R^{Fa} is preferably a hydrogen atom or a fluorine atom, and more preferably a fluorine atom. Provided that, when all R^{Fa} are hydrogen atoms or chlorine atoms, at least one of a, b, c, e, and f is 1 or more.

For example, a, b, c, d, e, and f may preferably each independently be an integer of 0 to 100.

For example, the sum of a, b, c, d, e, and f is preferably 5 or more, more preferably 10 or more, and for example, may be 15 or more or 20 or more. The sum of a, b, c, d, e, and f is preferably 200 or less, more preferably 100 or less, sill more preferably 60 or less, and for example, may be 50 or less, or 30 or less.

These repeating units may be linear or branched, or for example, may comprise a ring structure. For example, -(OC₆F₁₂)- may be -(OCF₂CF₂CF₂CF₂CF₂CF₂)-, - (OCF(CF₃)CF₂CF₂CF₂CF₂)-, -(OCF₂CF(CF₃)CF₂CF₂CF₂)-, - (OCF₂CF₂CF(CF₃)CF₂CF₂)-, -(OCF₂CF₂CF₂CF(CF₃)CF₂)-, - (OCF₂CF₂CF₂CF₂CF(CF₃))-, or the like. For example, -(OC₅F₁₀)- may be - (OCF₂CF₂CF₂CF₂CF₂)-, -(OCF(CF₃)CF₂CF₂CF₂)-, -(OCF₂CF(CF₃)CF₂CF₂)-, - (OCF₂CF₂CF(CF₃)CF₂)-, -(OCF₂CF₂CF₂CF(CF₃))-, or the like. For example, - (OC₄F₈)- may be any one of -(OCF₂CF₂CF₂CF₂)-, -(OCF(CF₃)CF₂CF₂)-, - (OCF₂CF(CF₃)CF₂)-, -(OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)-, and -(OCF₂CF(C₂F₅))-. For example, - (OC₃F₆)- (that is, in the above formula, R^{Fa} is a fluorine atom) may be any one of - (OCF₂CF₂CF₂)-, -(OCF(CF₃)CF₂)-, and -(OCF₂CF(CF₃))-. For example, -(OC₂F₄)-may be any one of -(OCF₂CF₂)-and -(OCF(CF₃))-.

The above ring structures may be a 3-membered ring, 4-membered rings, 5-membered rings, or 6-membered rings described below.

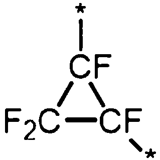

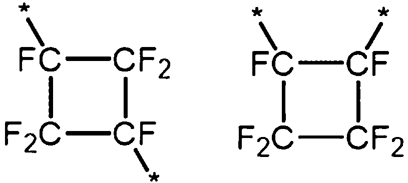

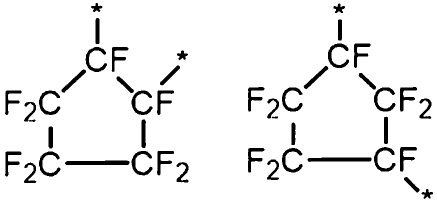

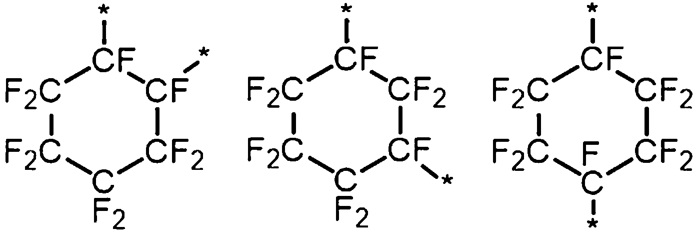

In the formula, * represents a binding position.

The above ring structure may preferably be a 4-membered ring, a 5-membered ring, or a 6-membered ring, and more preferably a 4-membered ring or a 6-membered ring.

The repeating unit having a ring structure may preferably be any one of the following units.

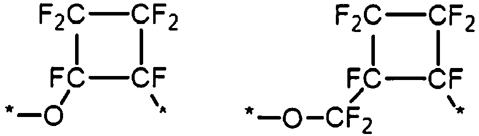

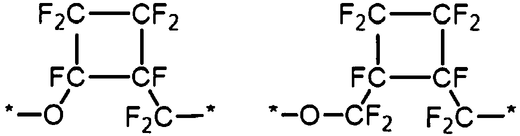

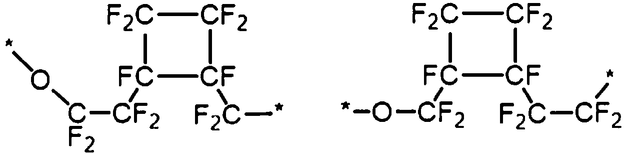

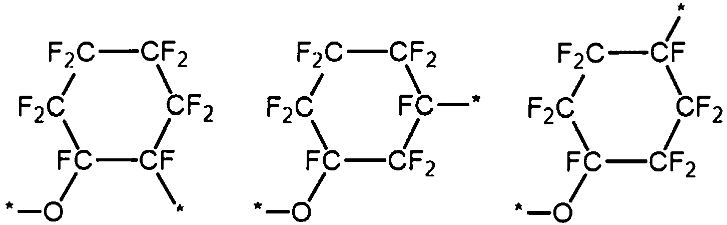

In the formula, * represents a binding position.

In one aspect, the above repeating unit is linear. By making the above repeating unit linear, the surface lubricity, abrasion durability, and the like of the surface-treating layer can be improved.

In one aspect, the above repeating unit is branched. By making the above repeating unit branched, the dynamic friction coefficient of the surface-treating layer can be increased.

In one aspect, R^{F} is independently a group represented by any of the following formulae (f1) to (f7) , and preferably a group represented by the following formula (f7):

-(OC₃F₆)_{d}-(OC₂F₄)ₑ- (f1)

wherein d is an integer of 1 to 200, and e is 0 or 1;

   -(OC₄F₈)_{c}-(OC₃F₆)_{d}-(OC₂F₄)ₑ-(OCF₂)_{f}- (f2)
wherein c and d are each independently an integer of 0 or more and 30 or less, e and f are each independently an integer of 1 or more and 200 or less,
the sum of c, d, e, and f is 2 or more, and
the occurrence order of the respective repeating units in parentheses with a subscript c, d, e, or f is arbitrary in the formula;

   -(R³⁶-R³⁷)_{g}- (f3)
wherein R³⁶ is OCF₂ or OC₂F₄,
R³⁷ is a group selected from OC₂F₄, OC₃F₆, OC₄F₈, OC₅F₁₀, and OC₆F₁₂, or a combination of two or three groups independently selected from these groups, and
g is an integer of 2 to 100;

   -(R³⁶-R³⁷)_{g}-R^{r}-(R^{37'}-R^{36'})_{g'}- (f4)
wherein R³⁶ is OCF₂ or OC₂F₄,
R³⁷ is a group selected from OC₂F₄, OC₃F₆, OC₄F₈, OC₅F₁₀, and OC₆F₁₂, or a combination of two or three groups independently selected from these groups,
R^{36'} is OCF₂ or OC₂F₄,
R^{37'} is a group selected from OC₂F₄, OC₃F₆, OC₄F₈, OC₅F₁₀, and OC₆F₁₂, or a combination of two or three groups independently selected from these groups,
g is an integer of 2 to 100,
g' is an integer of 2 to 100, and
R^{r} is 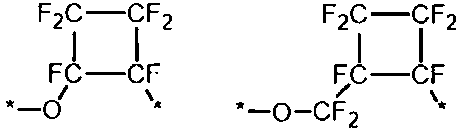 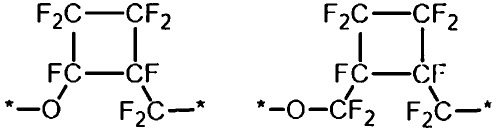 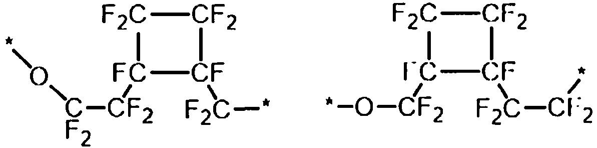 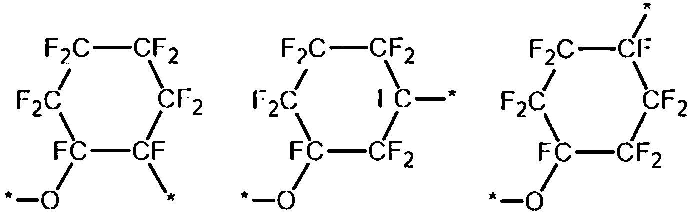 wherein * represents a binding position;

   -(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
wherein e is an integer of 1 or more and 200 or less, a, b, c, d, and f are each independently an integer of 0 or more and 200 or less, and the occurrence order of the respective repeating units in parentheses with a, b, c, d, e, or f is arbitrary in the formula;

   -(OC₆F₁₂)ₐ-(OC₅F₁₀)_{b}-(OC₄F₈)_{c}-(OC₃F₆)_{d}-(OC₂F₄)ₑ-(OCF₂)_{f}- (f6)
wherein f is an integer of 1 or more and 200 or less, a, b, c, d, and e are each independently an integer of 0 or more and 200 or less, and the occurrence order of the respective repeating units in parentheses with a, b, c, d, e, or f is arbitrary in the formula;

   -(CF₂CF₂CH₂O)_{d}- (f7)
wherein d represents an integer of 1 to 200.

In the above formula (f1), d is preferably an integer of 5 to 200, more preferably 10 to 100, sill more preferably 15 to 50, and for example, 25 to 35. OC₃F₆ in the above formula (f1) is preferably (OCF₂CF₂CF₂), (OCF(CF₃)CF₂), or (OCF₂CF(CF₃)), and more preferably (OCF₂CF₂CF₂). (OC₂F₄) in the above formula (f1) is preferably (OCF₂CF₂) or (OCF(CF₃)), and more preferably (OCF₂CF₂). In one aspect, e is 0. In another aspect, e is 1.

In the above formula (f2), e and f are preferably each independently an integer of 5 to 200, and more preferably 10 to 200. The sum of c, d, e, and f is preferably 5 or more, more preferably 10 or more, and for example, may be 15 or more, or 20 or more. In one aspect, the above formula (f2) is preferably a group represented by - (OCF₂CF₂CF₂CF₂)_{c}-(OCF₂CF₂CF₂)_{d}-(OCF₂CF₂)ₑ-(OCF₂)_{f}-. In another aspect, for example, the formula (f2) may be a group represented by -(OC₂F₄)ₑ-(OCF₂)_{f}-.

In the above formula (f3), R³⁶ is preferably OC₂F₄. In the above (f3), R³⁷ is preferably a group selected from OC₂F₄, OC₃F₆, and OC₄F₈, or a combination of two or three groups independently selected from these groups, and more preferably a group selected from OC₃F₆ and OC₄F₈. The combination of two or three groups independently selected from OC₂F₄, OC₃F₆, and OC₄F₈ is not limited, and examples thereof include -OC₂F₄OC₃F₆-, -OC₂F₄OC₄F₈-, -OC₃F₆OC₂F₄-, -OC₃F₆OC₃F₆-, - OC₃F₆OC₄F₈-, -OC₄F₈OC₄F₈-, -OC₄F₈OC₃F₆-, -OC₄F₈OC₂F₄-, -OC₂F₄OC₂F₄OC₃F₆-, - OC₂F₄OC₂F₄OC₄F₈-, -OC₂F₄OC₃F₆OC₂F₄-, -OC₂F₄OC₃F₆OC₃F₆-, -OC₂F₄OC₄F₈OC₂F₄-, -OC₃F₆OC₂F₄OC₂F₄-, -OC₃F₆OC₂F₄OC₃F₆-, -OC₃F₆OC₃F₆OC₂F₄-, and - OC₄F₈OC₂F₄OC₂F₄-. In the above formula (f3), g is preferably an integer of 3 or more, and more preferably 5 or more. The above g is preferably an integer of 50 or less. In the above formula (f3), OC₂F₄, OC₃F₆, OC₄F₈, OC₅F₁₀, and OC₆F₁₂ may be either linear or branched, and preferably linear. In this aspect, the above formula (f3) is preferably -(OC₂F₄-OC₃F₆)_{g}- or -(OC₂F₄-OC₄F₈)_{g}-.

In the above formula (f4), R³⁶, R³⁷, and g have the same meanings as the description in the above formula (f3), and have the same aspects. R^{36'}, R^{37'}, and g' respectively have the same meanings as R³⁶, R³⁷, and g in the above formula (f3), and have the same aspects. R^{r} is preferably 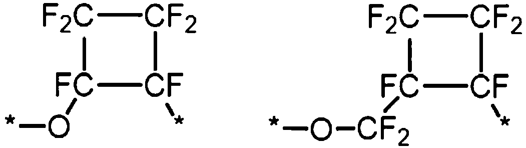 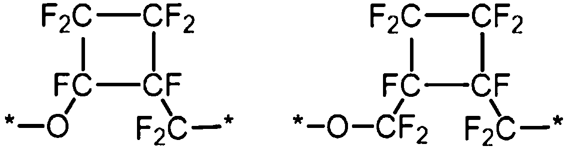 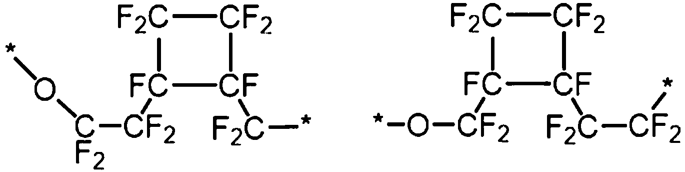
wherein * represents a binding position,
and more preferably 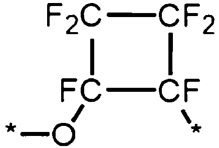
wherein * represents a binding position.

In the above formula (f5), e is preferably an integer of 1 or more and 100 or less, and more preferably 5 or more and 100 or less. The sum of a, b, c, d, e, and f is preferably 5 or more, more preferably 10 or more, and for example, 10 or more and 100 or less.

In the above formula (f6), f is preferably an integer of 1 or more and 100 or less, and more preferably 5 or more and 100 or less. The sum of a, b, c, d, e, and f is preferably 5 or more, more preferably 10 or more, and for example, 10 or more and 100 or less.

In the above formula (f7), d is preferably an integer of 1 or more and 100 or less, more preferably 5 or more and 100 or less, and sill more preferably 10 or more and 100 or less.

In one aspect, R^{F} is a group represented by the above formula (f1).

In one aspect, R^{F} is a group represented by the above formula (f2).

In one aspect, R^{F} is a group represented by the above formula (f3).

In one aspect, R^{F} is a group represented by the above formula (f4).

In one aspect, R^{F} is a group represented by the above formula (f5).

In one aspect, R^{F} is a group represented by the above formula (f6).

In one aspect, R^{F} is a group represented by the above formula (f7).

In R^{F}, a ratio of e to f (hereinafter, referred to as "e/f ratio") is 0.1 to 10, preferably 0.2 to 5, more preferably 0.2 to 2, sill more preferably 0.2 to 1.5, and still more preferably 0.2 to 0.85. By setting the e/f ratio to 10 or less, the lubricity, abrasion durability, and chemical resistance (e.g., the durability against artificial sweat) of the surface-treating layer obtained from the compound are more improved. The smaller the e/f ratio is, the more the lubricity and abrasion durability of the surface-treating layer are improved. Meanwhile, by setting the e/f ratio to 0.1 or more, the stability of the compound can be more enhanced. The larger the e/f ratio is, the more the stability of the compound is improved.

The number average molecular weight of the portion represented by R^{F} is not limited, and is, for example, 500 to 30,000, preferably 1,500 to 30,000, and more preferably 2,000 to 10,000. As used herein, the number average molecular weight of the portion represented by R^{F} is a value measured by ¹⁹F-NMR.

In another aspect, the number average molecular weight of the portion represented by R^{F} may be 500 to 30,000, preferably 1,000 to 20,000, more preferably 2,000 to 15,000, still more preferably 2,000 to 10,000, and for example, 3,000 to 6,000.

In still another aspect, the number average molecular weight of the portion represented by R^{F} may be 4,000 to 30,000, preferably 5,000 to 10,000, and more preferably 6,000 to 10,000.

R^{f1} independently represents a divalent hydrocarbon group optionally having one or more substituents or a single bond .

The "hydrocarbon group" in the above hydrocarbon group optionally having one or more substituents may preferably be a divalent C₁₋₂₀ hydrocarbon group, more preferably a divalent C₁₋₂₀ aliphatic hydrocarbon group, and sill more preferably a C₁₋₁₆ alkylene group.

The above hydrocarbon group optionally having one or more substituents is preferably a C₁₋₁₆ alkylene group optionally having one or more substituents. For example, the "C₁₋₁₆ alkylene group" in a C₁₋₁₆ alkylene group optionally substituted with one or more fluorine atoms may be linear or branched, and is preferably a linear or branched C₁₋₁₀ alkylene group, more preferably a linear or branched C₁₋₆ alkylene group, sill more preferably a linear or branched C₁₋₃ alkylene group, even more preferably a linear C₁₋₆ alkylene group, and in particular, a linear C₁₋₃ alkylene group.

Examples of the substituent that may be contained in the above hydrocarbon group include one or more selected from the group consisting of -COOR^{f13}, -OR^{f13}, - NR^{f13}₂, -NR^{f13}-CO-R^{f13} , -CO-NR^{f13}₂, -NO₂, -CN, -COR¹⁴, -SO₃R^{f14}, -O-COR^{f14} , and a halogen atom. R^{f13} and R^{f14} have the same meanings as above.

The substituent that may be contained in the above hydrocarbon group may preferably be one or more selected from the group consisting of -COOH, -OH, -NH₂, - CONR^{f13}, -NO₂, -CN, -COH, -COCl, -SO₃H, -O-COR^{f14}, and a halogen atom, more preferably a halogen atom, and sill more preferably a fluorine atom or a chlorine atom.

In one aspect, the above hydrocarbon group optionally having one or more substituents represented by R^{f1} is preferably a C₁₋₁₆ alkylene group optionally substituted with one or more fluorine atoms.

"C₁₋₁₆ alkylene group" in the C₁₋₁₆ alkylene group optionally substituted with one or more fluorine atoms may be linear or branched and is preferably a linear or branched C₁₋₆ alkylene group, particularly a C₁₋₃ alkylene group, and more preferably a linear C₁₋₆ alkylene group, particularly a C₁₋₃ alkylene group.

R^{f1} is preferably a C₁₋₁₆ alkylene group substituted with one or more fluorine atoms, and more preferably a C₁₋₁₆ perfluoroalkylene group.

For example, the above C₁₋₁₆ perfluoroalkylene group may be linear or branched, and is preferably a linear or branched C₁₋₆ perfluoroalkylene group, in particular, a C₁₋₃ perfluoroalkylene group, more preferably a linear C₁₋₆ perfluoroalkylene group, in particular, a C₁₋₃ perfluoroalkylene group, and specifically, -CF₂-, -CF₂CF₂-, or - CF₂CF₂CF₂-.

In the above formula, R^{f2} is a divalent hydrocarbon group optionally having one or more substituents or a single bond.

The "hydrocarbon group" in the above hydrocarbon group optionally having one or more substituents may preferably be a C₁₋₂₀ hydrocarbon group, more preferably a C₁₋₂₀ aliphatic hydrocarbon group, and sill more preferably a C₁₋₁₆ alkyl group.

The above hydrocarbon group optionally having one or more substituents is preferably a C₁₋₁₆ alkyl group optionally having one or more substituents. For example, the "C₁₋₁₆ alkyl group" in a C₁₋₁₆ alkyl group optionally substituted with one or more fluorine atoms may be linear or branched, preferably a linear or branched C₁₋₁₀ alkyl group, more preferably a linear or branched C₁₋₆ alkyl group, sill more preferably a linear or branched C₁₋₃ alkyl group, even more preferably a linear C₁₋₆ alkyl group, and in particular, a linear C₁₋₃ alkyl group.

Examples of the substituent that may be contained in the above hydrocarbon group include one or more selected from the group consisting of -COOR^{f13}, -OR^{f13}, - NR^{f13}₂, -NR^{f13}-CO-R^{f13} , -CO-NR^{f13}₂, -NO₂, -CN, -COR¹⁴, -SO₂R^{f14}, -O-COR^{f14}, and a halogen atom. R^{f13} and R^{f14} have the same meanings as above.

The substituent that may be contained in the above hydrocarbon group may preferably be one or more selected from the group consisting of -COOH, -OH, -NH₂, - CONR^{f13}, -NO₂, -CN, -COH, -COCl, -SO₃H, -O-COR^{f14}, and a halogen atom, more preferably a halogen atom, and sill more preferably a fluorine atom or a chlorine atom.

In one aspect, the hydrocarbon group optionally having one or more substituents represented by R^{f2} is preferably a C₁₋₁₆ alkyl group optionally substituted with one or more fluorine atoms.

For example, the "C₁₋₁₆ alkyl group" in the above C₁₋₁₆ alkyl group optionally substituted with one or more fluorine atoms may be linear or branched, preferably a linear or branched C₁₋₆ alkyl group, in particular, a C₁₋₃ alkyl group, more preferably a linear C₁₋₆ alkyl group, and in particular, a C₁₋₃ alkyl group.

R^{f2} is preferably a C₁₋₁₆ alkyl group substituted with one or more fluorine atoms, and more preferably a C₁₋₁₆ perfluoroalkyl group.

For example, the above C₁₋₁₆ perfluoroalkyl group may be linear or branched, and is preferably a linear or branched C₁₋₆ perfluoroalkyl group, in particular, a C₁₋₃ perfluoroalkyl group, more preferably a linear C₁₋₆ perfluoroalkyl group, in particular, a C₁₋₃ perfluoroalkyl group, and specifically, -CF₃, -CF₂CF₃, or -CF₂CF₂CF₃.

In the above formula, Y¹ represents one selected from the group consisting of a halogen atom, a hydrogen atom, -COOR^{f3}, -OR^{f3}, -NR^{f3}₂, -NR^{f3}-CO-R^{f3}, -CO-NR^{f3}₂, - NO₂, -CN, -COR^{f4}, -SO₂R^{f4}, and -O-COR^{f4}.

In the above formula, Y² represents one selected from the group consisting of a halogen atom, a hydrogen atom, -COOR^{f3}, -OR^{f3}, -NR^{f3}₂, -NR^{f3}-CO-R^{f3}, -CO-NR^{f3}₂, - NO₂, -CN, -COR^{f4}, -SO₂R^{f4}, and -O-COR^{f4}.

R^{f3} independently represents a C₁₋₁₆ alkyl group optionally having one or more substituents or a hydrogen atom.

For example, "C₁₋₁₆ alkylene group" in the above C₁₋₁₆ alkylene group optionally substituted with one or more fluorine atoms may be linear or branched, and is preferably a linear or branched C₁₋₆ alkylene group, in particular, a C₁₋₃ alkylene group, more preferably a linear C₁₋₆ alkylene group, and in particular, a C₁₋₃ alkylene group.

Examples of the substituent that may be contained in the above C₁₋₁₆ alkylene group represented by R^{f3} include one or more selected from the group consisting of - COOR^{f13}, -OR^{f13}, -NR^{f13}₂ -NR^{f13}-CO-R^{f13} , -CO-NR^{f13}₂, -NO₂, -CN, -COR¹⁴, -SO₃R^{f14}, - O-COR^{f14}, and a halogen atom. R^{f13} and R^{f14} have the same meanings as above.

The substituent that may be contained in the above C₁₋₁₆ alkylene group represented by R^{f3} may preferably be one or more selected from the group consisting of -COOH, -OH, -NH₂, -CONR^{f13}, -NO₂, -CN, -COH, -COCl, -SO₃H, -O-COR^{f14}, and a halogen atom, more preferably a halogen atom, and sill more preferably a fluorine atom or a chlorine atom.

In one aspect, the above C₁₋₁₆ alkylene group optionally having one or more substituents represented by R^{f3} may preferably be a C₁₋₁₆ alkylene group optionally substituted with one or more fluorine atoms.

The above C₁₋₁₆ alkylene group optionally substituted with one or more fluorine atoms represented by R^{f3} is preferably a C₁₋₁₆ alkylene group substituted with one or more fluorine atoms, and more preferably a C₁₋₁₆ perfluoroalkylene group.

For example, the above C₁₋₁₆ perfluoroalkylene group in R^{f3} may be linear or branched, and is preferably a linear or branched C₁₋₆ perfluoroalkylene group, in particular, a C₁₋₃ perfluoroalkylene group, more preferably a linear C₁₋₆ perfluoroalkylene group, in particular, a C₁₋₃ perfluoroalkylene group, and specifically, - CF₂-, -CF₂CF₂-, or -CF₂CF₂CF₂-.

R^{f4} independently represents a C₁₋₁₆ alkyl group optionally having one or more substituents, a hydrogen atom, or a halogen atom .

For example, the "C₁₋₁₆ alkyl group" in the above C₁₋₁₆ alkyl group optionally having one or more substituents may be linear or branched, and is preferably a linear or branched C₁₋₅ alkyl group, in particular, a C₁₋₃ alkyl group, more preferably a linear C₁₋₆ alkyl group, and in particular, a C₁₋₃ alkyl group.

Examples of the substituent that may be contained in the above C₁₋₁₆ alkyl group represented by R^{f4} include one or more selected from the group consisting of -COOR^{f13}, -OR^{f13}, -NR^{f13}₂, -NR^{f13}-CO-R^{f13} , -CO-NR^{f13}₂, -NO₂, -CN, -COR¹⁴, -SO₂R^{f14}, -O-COR^{f14}, and a halogen atom. R^{f13} and R^{f14} have the same meanings as above.

The substituent that may be contained in the above C₁₋₁₆ alkyl group represented by R^{f4} may preferably be one or more selected from the group consisting of -COOH, - OH, -NH₂, -CONR^{f13}, -NO₂, -CN, -COH, -COCl, -SO₃H, -O-COR^{f14}, and a halogen atom, more preferably a halogen atom, and sill more preferably a fluorine atom or a chlorine atom.

In one aspect, the above C₁₋₁₆ alkyl group optionally having one or more substituents represented by R^{f4} may preferably be a C₁₋₁₆ alkyl group optionally substituted with one or more fluorine atoms.

The above C₁₋₁₆ alkyl group optionally substituted with one or more fluorine atoms represented by R^{f4} is preferably a C₁₋₁₆ alkyl group substituted with one or more fluorine atoms, and more preferably a C₁₋₁₆ perfluoroalkyl group.

For example, the C₁₋₁₆ perfluoroalkyl group in R^{f4} may be linear or branched, preferably a linear or branched C₁₋₆ perfluoroalkyl group, in particular, a C₁₋₃ perfluoroalkyl group, more preferably a linear C₁₋₆ perfluoroalkyl group, in particular, a C₁₋₃ perfluoroalkyl group, and specifically -CF₃, -CF₂CF₃, or -CF₂CF₂CF₃.

Examples of the halogen atom represented by Y¹ or Y² include a fluorine atom, a chlorine atom, a bromine atom, and an iodine atom, and a fluorine atom or a chlorine atom is preferable.

Y¹ may preferably be one selected from the group consisting of -COOH, -OH, - NH₂, -CONR^{f3}, -NO₂, -CN, -COH, -COCl, -SO₃H, -O-COR^{f4}, and a halogen atom.

Y² may preferably be one selected from the group consisting of -COOH, -OH, - NH₂, -CONR^{f3}, -NO₂, -CN, -COH, -COCl, -SO₃H, -O-COR^{f4}, and a halogen atom.

In the above formula, q is 0 or 1. In one aspect, q is 0, and in another aspect, q is 1.

The number average molecular weight of the above fluoropolyether is not limited, and for example, 500 to 30,000, preferably 1,500 to 30,000, and more preferably 2,000 to 10,000. As used herein, the number average molecular weight of the fluoropolyether can be measured by ¹⁹F-NMR.

In another aspect, the number average molecular weight of the fluoropolyether may be 500 to 30,000, preferably 1,000 to 20,000, more preferably 2,000 to 15,000, still more preferably 2,000 to 10,000, and for example, 3,000 to 6,000.

In still another aspect, the number average molecular weight of the fluoropolyether may be 4,000 to 30,000, preferably 5,000 to 10,000, and more preferably 6,000 to 10,000.

For example, the above fluorine-containing polymer may be crystalline or amorphous. In one aspect, in a differential scanning thermal analysis of the fluorine-containing polymer, the fluorine-containing polymer may be determined as a crystalline polymer when a crystallization temperature is observed, and the fluorine-containing polymer may be determined as an amorphous polymer when a crystallization temperature is not observed. In one aspect, the above fluorine-containing polymer is crystalline. In another aspect, the above fluorine-containing polymer is amorphous.

The above fluorine-containing polymer preferably has at least one of a glass transition temperature and a melting point at 50°C or higher. In other words, it is preferable that the glass transition temperature of the above fluorine-containing polymer be 50°C or higher or the melting point of the above fluorine-containing polymer be 50°C or higher. Specifically, when the above fluorine-containing polymer is a crystalline polymer, the fluorine-containing polymer has both the glass transition temperature and the melting point, so that at least one of the glass transition temperature and the melting point is only required to be 50°C or higher, and when the above fluorine-containing polymer is an amorphous polymer, the fluorine-containing polymer has only the glass transition temperature, so that the glass transition temperature is only required to be 50°C or higher. When the above fluorine-containing polymer has at least one of the glass transition temperature and the melting point at 50°C or higher, the heat resistance of the composite to be obtained is favorable. For example, the above fluorine-containing polymer may have at least one of the glass transition temperature and the melting point at 70°C or higher and 400°C or lower, and may further have at least one of the glass transition temperature and the melting point at 150°C or higher and 300°C or lower.

For example, the above fluorine-containing polymer may have a blocked moiety at an end or may not have a blocked moiety. The blocked moiety may be a C₆₋₃₀ aromatic hydrocarbon group optionally having one or more substituents or a C₆₋₃₀ cycloaliphatic hydrocarbon group optionally having one or more substituents. Examples of the above blocked moiety include a dinitrophenyl group; cyclodextrin; an adamantyl group; a trityl group; fluorescein; pyrene; an alkyl group, an alkoxy group, a hydroxy group, a halogen atom, a phenyl group having one or more selected from the group consisting of a cyano group, a sulfonyl group, a carboxy group, an amino group, and a phenyl group as a substituent; and steroid, one or more selected from the group consisting of a dinitrophenyl group, cyclodextrin, an adamantyl group, a trityl group, fluorescein, and pyrene are preferable, and one or more selected from the group consisting of an adamantyl group and a trityl group are more preferable. The number of blocked moieties contained in the above fluorine-containing polymer may be one or more and two or less.

The number average molecular weight of the above fluorine-containing polymer may be, for example, 500 to 1,000,000, preferably 1,000 to 700,000, more preferably 2,000 to 500,000, still more preferably 2,000 to 300,000, and for example, 3,000 to 300,000.

In one aspect, it is preferable that the cyclic compound comprises the compound represented by the formula (1) and the fluorine-containing polymer comprises a fluorine-containing olefin-based polymer.

The pyrolysis temperature of the above composite is preferably 170°C or higher, more preferably 200°C or higher, and may be, for example, 400°C or lower. The composite of the present disclosure has favorable heat resistance and can suitably be used in applications required for high heat resistance.

In the present disclosure, the pyrolysis temperature is defined as the temperature at the time when, in thermogravimetric measurement of about 10 mg of a sample under a nitrogen atmosphere at a nitrogen flow rate of 200 mL/min, the mass of a measurement object is decreased by 5 mass% as compared with the mass of the measurement object before initiation of the measurement.

Where tₓ indicates the pyrolysis temperature of the above composite and t_{y} indicates a lower one of the pyrolysis temperature of the cyclic compound before formation of the above composite and the pyrolysis temperature of the fluorine-containing polymer before formation of the above composite, tₓ - t_{y} is preferably 50°C or more, may be 50°C or more and 300°C or less, and further, 55°C or more and 250°C or less.

In the composite of the present disclosure, the pyrolysis temperature significantly improves by the combination of an extremely small amount of the cyclic compound with the polymer while the reason therefor is not clear. For example, when the amount of the cyclic compound is 10 parts by mass or less per 100 parts by mass of the polymer, the difference in the pyrolysis temperature of the composite to be obtained and the pyrolysis temperature of the polymer may preferably be 30°C or more, and more preferably 50°C or more.

### <Method for producing composite>

The above composite may be produced by a production method including contacting the fluorine-containing polymer and the above cyclic compound represented by the formula (I) in an absence of a solvent to obtain the composite.

According to the production method of the present disclosure, the fluorine-containing polymer and the cyclic compound are contacted in an absence of a solvent, and thus, inclusion of the fluorine-containing polymer by the cyclic compound easily progresses regardless of the degree of progress of the formation of a composite. When contacting is performed in a solvent, inclusion of the fluorine-containing polymer by the cyclic compound may change the solubility in the solvent and the formation of a composite may not progress. Since no solvent is used in the production method of the present disclosure, a desired composite is easily obtained without being influenced by the change in solubility accompanied by the progress of the formation of a composite.

The contacting method is not limited, and examples thereof include methods using a ball mill, a planetary centrifugal mixer, a homogenizer, ultrasonic dispersion, or the like.

The contacting is preferably performed at a temperature higher than at least one of the glass transition temperature and the melting point of the fluorine-containing polymer. This makes it easy for the fluorine-containing polymer to be freely deformed, so that the composite can be more efficiently produced.

The contacting is preferably performed at a temperature preferably 5°C or more, and more preferably 10°C or more higher than at least one of the glass transition temperature and the melting point of the fluorine-containing polymer. The difference between the temperature at which the contacting is performed and at least one of the glass transition temperature and the melting point of the fluorine-containing polymer may be, for example, 50°C or less, and further 30°C or less.

In the production method of the present disclosure, the fluorine-containing polymer and the cyclic compound are contacted with each other in an absence of a solvent, but the production method is not limited thereto, and contacting may be performed in the presence of a solvent. Examples of such a solvent include water, ethanol, dimethylformamide, toluene, methanol, chlorobenzene, diethylformamide, dimethyl sulfoxide, water, hydrogen peroxide, methylamine, a sodium hydroxide solution, N-methylpyrrolidone ether, acetonitrile, benzyl chloride, triethylamine, or ethylene glycol, or a mixture thereof.

The composite of the present disclosure can be produced by the above-described production method but is not limited to composites produced by the above-described production method. In addition, the above-described production method is capable of producing the composite of the present disclosure but is not limited only to an aspect of producing the composite of the present disclosure.

### <Composition>

A composition comprising the above composite is also included in the technical scope of the present disclosure.

For example, such a composition may further comprise one or more selected from the group consisting of a resin, a solvent, and a further additive in addition to the above composite.

In such a composition, the content of the above composite may preferably be 0.1 mass% or more and less than 100 mass%, and more preferably 1 mass% or more and 99 mass% or less per 100 mass% of the solid content of the composition.

Examples of the resin include acrylic resins, polyurethane resins, polyolefin resins, polyester resins, polyamide resins, vinyl chloride resins, styrene resins, vinyl ether resins, polyvinyl alcohol resins, polycarbonate resins, polysulfone resins, and the like.

Examples of the above solvent include water, ethanol, dimethylformamide, toluene, methanol, chlorobenzene, diethylformamide, dimethyl sulfoxide, water, hydrogen peroxide, methylamine, a sodium hydroxide solution, N-methylpyrrolidone ether, acetonitrile, benzyl chloride, triethylamine, or ethylene glycol, or a mixture thereof.

Examples of the above additive include an emulsifier, an antifoaming agent, a surfactant, a leveling agent, a thickening agent, a viscoelasticity adjusting agent, an antifoaming agent, a wetting agent, a dispersant, an antiseptic agent, a plasticizer, a penetrating agent, a fragrance, a fungicide, a miticide, an antifungal agent, an ultraviolet absorber, an antioxidant, an antistatic agent, a flame retarder, a dye, and a pigment.

For example, the above composition may be in a powder form or in a liquid form. In one aspect, the above composition is in a powder form, and in another aspect, the above composition is in a liquid form.

### Examples

Hereinafter, the present disclosure will be more specifically described with reference to Examples below, but the present disclosure is not limited thereto.

### (Synthesis Example 1)

In a 2 L single neck round bottomed flask, 25.0 g of a compound represented by the formula (1-2) and 350 mL of MeCN were put, and a solution obtained by dissolving 122.9 g of oxone (2KHSO₅·KHSO₄·K₂SO₄) in 350 mL of water was added thereto.

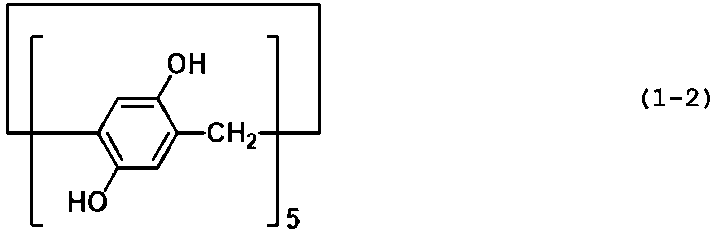

Then, 7.5 mL of iodobenzene was added, and the mixture was vigorously stirred at room temperature for 48 hours. Thereafter, the reaction liquid was poured into water, and the mixture was filtered by suction. The obtained yellow precipitate was washed with large amounts of water and methanol and dried.

First, 18.264 g of the washed and dried precipitate was dissolved in 350 mL of boiled 1,1,2,2-tetrachloroethane, and the insoluble matter was removed by suction filtration. The obtained red transparent filtrate was allowed to stand still at room temperature for 6 hours, and then allowed to stand still at 6 to 10°C for 8 hours. The precipitated fine crystal was filtered by suction, washed with a small amount of 1,1,2,2-tetrachloroethane three times, further washed with a small amount of methanol three times, and dried to obtain a compound represented by the formula (3-2).

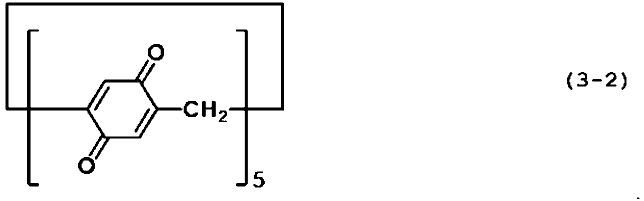

Obtaining of the compound represented by the formula (3-2) was demonstrated by ¹H NMR, ¹³C NMR, a time-of-flight mass spectrometer (ESI-TOF-MS), melting point measurement, and IR measurement.
¹H NMR (500.13 MHz, TFA-d, ppm): δ = 6.93(s, 10H, CH), 3.61 (s, 10H, CH₂).
¹³C NMR (125.72 MHz, TFA-d, ppm): δ = 190.5 (s, C=O), 146.8(s, C-CH₂), 138.1 (CH), 28.0 (CH₂).
HRMS (ESI-TOF-MS):
   m/z [M+Na]+ calculated for C₃₅H₂₁O₁₀: 601.1129; found: 601.1132
   m/z [M + Na]+ calcd for C₃₅H₂₀O₁₀Na: 623.0949; found: 623.0930
   Melting point: The compound showed no melting point and was degraded at over 250°C.
   IR (Nujol mull, cm⁻¹): 1,654, 1,610, 1,461, 1,377, 1,286, 1,250, 1,125, 921, 722

The structures of cyclic compounds used in Examples are shown.

| | |
|---|---|
| **P5Q** | 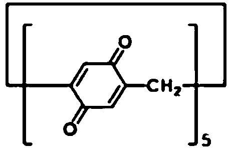 |
| **C2P5A** | 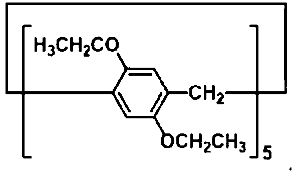 |
| **P5OH** | 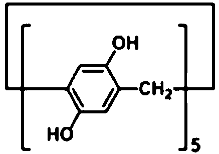 |
| **C5P5A** | 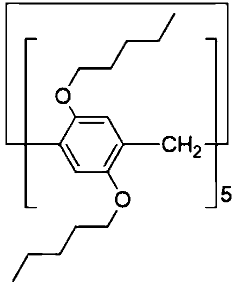 |

The polymers used in Examples and Comparative Examples are shown.

PBR: Commercially available polybutadiene having a weight average molecular weight of 5,000, cis-and trans-1,4 of 80%, and a vinyl group of 20% was used. A typical structural formula is shown below.

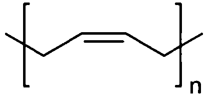

PVDF1: PVDF VP-832 manufactured by Daikin Industries, Ltd., melting point 178°C, MFR 230°C, 10 kgf: 3.15 g/10 min, molecular weight Mw 200,000 (GPC)

PVDF2: PVDF Kyner HSV900 manufactured by Arkema, melting point 162°C, MFR 230°C, 10 kgf: 0.2 g/10 min

FPE: Fluorine-containing polyether that is represented by the following formula, has a number average molecular weight of 4,400 to 5,000, and has a melting point of 70°C was used.

H-(CF₂CF₂CH₂O)ₙ-COOH

Measurement methods used in Examples are shown.

### (1) NMR

NMR is measured using an NMR measurement apparatus (JEOL JNM-ECS400) manufactured by JEOL Ltd.
¹H-NMR measurement conditions: 400 MHz (tetramethylsilane = 0 ppm)

### (2) DSC

Using a DSC (differential scanning calorimeter: Hitachi High-Tech Corporation., DSC7020), the temperature was increased (first run), reduced, and increased (second run) under the conditions of 10°C/min in a temperature range of 30°C to 200°C.

### (3) X-ray diffraction

X-ray diffraction was measured using an Automated Multipurpose X-ray Diffractometer (SmartLab: manufactured by Rigaku Holdings Corporation) under the following conditions.
Measurement angle: 10 to 30° (light source: Cu/Kα, wavelength: 1.5418 Å)

### (4) Pyrolysis temperature

The pyrolysis temperature was measured from 10 mg of a specimen using a TG/DTA analyzer (thermogravimetry/differential thermal analyzer) (STA7200) manufactured by Hitachi High-Tech Corporation in a nitrogen gas atmosphere with a nitrogen flow rate of 200 mL/min under measurement conditions of a temperature range of 23°C to 600°C and a temperature-increasing rate of 10°C/min. The pyrolysis temperature was defined as the temperature at the time when the mass of a measurement object was decreased by 5% as compared with the mass of the measurement object before initiation of the measurement.

### Example 1 (Composite of FPE and P5Q)

In a 5 mL glass tube, 0.65 g (5 mmol) of FPE was put, and the temperature thereof was then increased to 80°C to melt FPE completely. To the tube, 0.06 g (0.1 mmol) of P5Q was added as the cyclic compound, the mixture was allowed to stand still at 80°C for 15 hours and then allowed to cool to room temperature to obtain a solid composite. The resultant composite was purified by being washed with 30 mL of diethyl ether, which is a good solvent for FPE, five times in total.

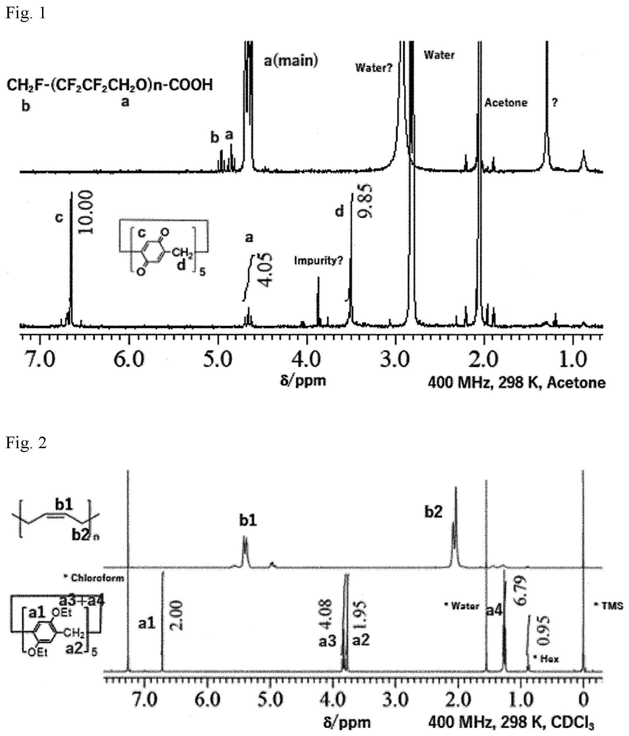

The composite after purification was dissolved in acetone d6 to measure ¹H-NMR, and as a result, peaks based on FPE and P5Q were observed. FIG. 1 shows the results. For comparison, FIG. 1 also shows the results of FPE only.

A ratio of the P5Q unit and the repeating unit of FPE was determined by the integral ratio of NMR and found to be P5Q:FPE = 1:2 (mole ratio). The ratio was calculated from the ratio between the integral value of hydrogen in FPE, a, at which the chemical shift was approximately 4.8 ppm (H, equivalent to two) and the integral value of hydrogen in P5Q, b, at which the chemical shift was approximately 6.8 ppm (H, equivalent to 10).

### Comparative Example 1 (Composite of PBR and C2P5A)

In a 5 mL glass tube, 0.27 g (5 mmol) of PBR (liquid polymer) was put, 0.089 g (0.1 mmol) of C2P5A was then added as the cyclic compound at room temperature, and the mixture was allowed to stand still at room temperature for 15 hours to obtain a liquid mixture. The obtained mixture was washed with 30 mL of hexane serving as a good solvent of PBR four times in total to obtain a purified product.

The purified product was dissolved in chloroform d to measure ¹H-NMR, and as a result, peaks based on PBR were not observed and no composite was obtained. FIG. 2 shows the results. For comparison, the results of PBR only are also shown.

### Example 2

As a polymer, 10 mg of PVDF 1 was weighed in a 5 mL sample bottle and heated to 200°C. PVDF was put into a molten state, C2P5A was added thereto as a cyclic compound in an amount shown in Table 1, and both components were sufficiently brought into contact with each other using a spatula at 200°C, held at 150°C for two hours, and returned to room temperature, thereby obtaining each composite. The blending ratios and the kinds are summarized and shown in the following table.

In addition, as a result of measuring the pyrolysis temperatures of the individual composites, the pyrolysis temperatures were 170°C or higher for all of the composites.

**[Table 1]**

| **Amount mixed** | | **Composition of mixture (mass%)** | |
|---|---|---|---|
| **Polymer** | **Cyclic compound** | **Polymer** | **Cyclic compound** |
| **PVDF1 (VP832)** | **C2P5A** | **PVDF1 (VP832)** | **C2P5A** |
| **10 mg** | **157 mg** | **6** | **94** |
| **10 mg** | **150 mg** | **10** | **90** |
| **10 mg** | **117 mg** | **30** | **70** |
| **10 mg** | **83 mg** | **50** | **50** |
| **10 mg** | **50 mg** | **70** | **30** |

### Example 3

Each composite was obtained in the same manner as in Example 2 except that the polymer was changed to PVDF2 (HSV900) and the amount of the cyclic compound was changed as shown in Table 2.

As a result of measuring the pyrolysis temperatures of the individual composites, the pyrolysis temperatures were 170°C or higher for all of the composites.

**[Table 2]**

| **Amount mixed** | | **Composition of mixture (mass%)** | |
|---|---|---|---|
| **Polymer** | **Cyclic compound** | **Polymer** | **Cyclic compound** |
| **PVDF2 (HSV900)** | **C2P5A** | **PVDF2 (HSV900)** | **C2P5A** |
| **10 mg** | **157 mg** | **6** | **94** |
| **10 mg** | **150 mg** | **10** | **90** |
| **10 mg** | **141 mg** | **15** | **85** |
| **10 mg** | **133 mg** | **20** | **80** |
| **10 mg** | **125 mg** | **25** | **75** |
| **10 mg** | **117 mg** | **30** | **70** |
| **10 mg** | **83 mg** | **50** | **50** |
| **10 mg** | **50 mg** | **70** | **30** |

### Example 4

Each composite was obtained in the same manner as in Example 2 except that the cyclic compound was changed to C5P5A.

**[Table 3]**

| **Amount mixed** | | **Comopsition of mixture (mass%)** | |
|---|---|---|---|
| **Polymer** | **Cyclic compound** | **Polymer** | **Cyclic compound** |
| **PVDF1 (VP832)** | **C2P5A** | **PVDF1 (VP832)** | **C2P5A** |
| **10 mg** | **157 mg** | **6** | **94** |
| **10 mg** | **150 mg** | **10** | **90** |
| **10 mg** | **117 mg** | **30** | **70** |
| **10 mg** | **83 mg** | **50** | **50** |
| **10 mg** | **50 mg** | **70** | **30** |

### Example 5

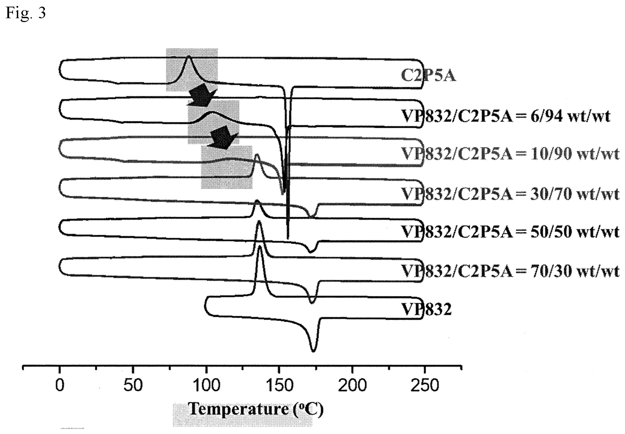

The results of DSC measurement performed on the individual composites obtained in Example 2 and the results of DSC measurement performed on C2P5A alone and PVDF1 alone, as comparison data, are shown in Fig. 3.

From these results, it is found that as the amount of C2P5A added increases, the melting point of PVDF1 (VP832) further disappears. This is considered to be because the crystallization of PVDF itself was hindered due to C2P5A included.

In addition, it is found that when the amount of PVDF1 increases, the crystallization temperature of C2P5A also shifts toward high temperatures, and the melting point also disappears. This is considered to be because due to C2P5A included, the temperature necessary for crystallization becomes higher, and crystallization becomes impossible in the end.

### Example 6

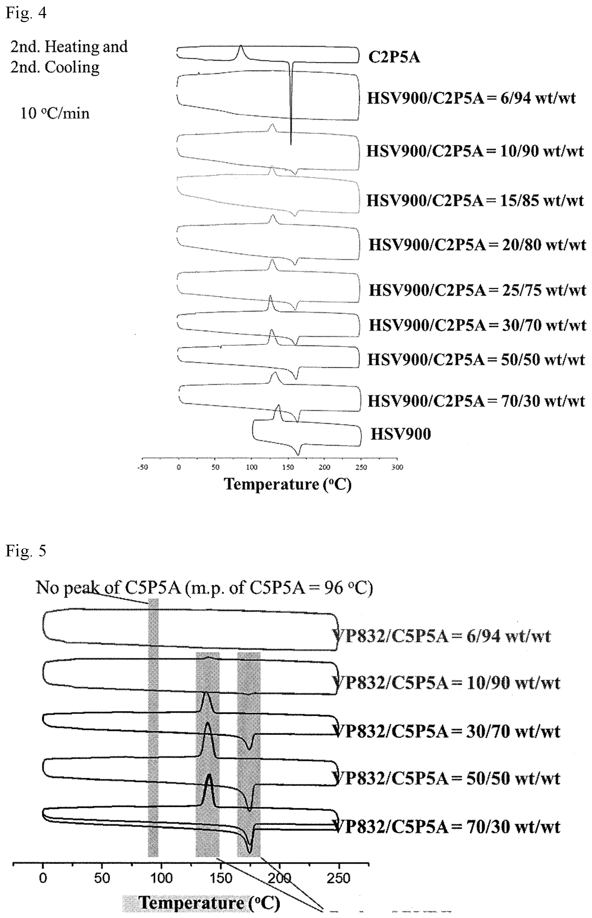

The results of DSC measurement performed on the individual composites obtained in Example 3 and the results of DSC measurement performed on C2P5A alone and PVDF2 alone, as comparison data, are shown in Fig. 4. In Example 3, compared with Example 2, the polymer was changed from PVDF1 (VP832) to PVDF2 (HSV900) having a low melting point, but the results were the same as those in Example 2, melting point disappearance of PVDF2 and melting point disappearance of C2P5A were observed, and generation of a clathrate compound was suggested.

### Example 7

The results of DSC measurement performed on the individual composites obtained in Example 4 are shown in Fig. 5. In Example 4, compared with Example 2, the cyclic compound was changed from C2P5A to C5P5A, but the results were the same, melting point disappearance of PVDF1 and melting point disappearance of C5P5A were observed, and generation of a clathrate compound was suggested.

### Example 8

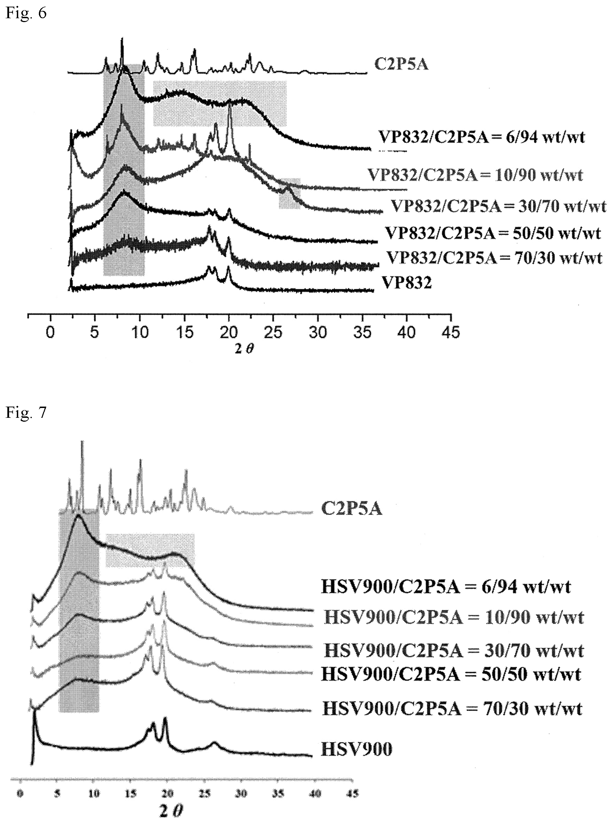

The results of X-ray diffraction measurement performed on the individual composites obtained in Example 2 and the results of X-ray diffraction measurement performed on C2P5A alone and PVDF1 alone, as comparison data, are shown in Fig. 6.

Similar to the results of DSC, as the amount of C2P5A added to PVDF1 (VP832) alone increased, diffraction peaks that show the crystallinity of PVDF1 further disappeared.

In addition, it was possible to newly confirm a new long period structure at 20 = near 8° due to the addition of C2P5A. When analysis is made with an assumption that the new long period structure is the interplanar spacing of C2P5A included in PVDF1, it can be said that one C2P5A has been intercalated into approximately four repeating structural units (monomer units) of PVDF1.

### Example 9

The results of X-ray diffraction measurement performed on the individual composites obtained in Example 3 and the results of X-ray diffraction measurement performed on C2P5A alone and PCDF2 alone, as comparison data, are shown in Fig. 7.

As in DSC, the kind of the polymer was changed from PVDF1 (VP832) to PVDF2 (HSV900); however, similar to the results of DSC, as the amount of C2P5A added to PVDF2 (HSV900) alone increased, diffraction peaks that show the crystallinity of PVDF further disappeared.

In addition, it was possible to newly confirm a new long period structure at 20 = near 8° due to the addition of C2P5A. When analysis is made with an assumption that the new long period structure is the interplanar spacing of C2P5A included in PVDF2, it can be said that one C2P5A has been intercalated into approximately four repeating structural units (monomer units) of PVDF2.

The invention may be further illustrated by the following embodiments:

### Embodiments

1. A composite comprising: a fluorine-containing polymer; and one or more cyclic compounds that comprise the fluorine-containing polymer, wherein
   the cyclic compound comprises a compound represented by the following formula (I): 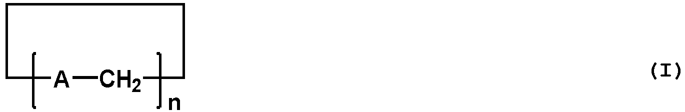 wherein
   A independently represents a divalent C₄₋₅₀ organic group containing one or more selected from -OR and -CO-,
   R independently represents an organic group optionally containing one or more fluorine atoms, or a hydrogen atom, and
   n represents an integer of 4 to 20.
2. The composite according to embodiment 1, wherein the cyclic compound contains a compound represented by any of the following formulae (1) to (3): 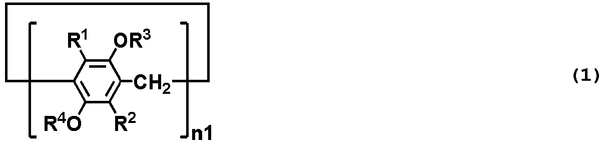 wherein
   R¹ independently represents a hydrogen atom or an organic group,
   R² independently represents a hydrogen atom or an organic group,
   R³ independently represents a hydrogen atom or an organic group,
   R⁴ independently represents a hydrogen atom or an organic group, and
   n1 is an integer of 4 to 20, 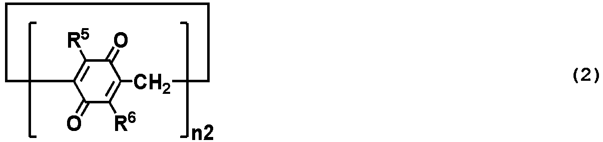 wherein
      R⁵ independently represents a hydrogen atom or an organic group,
      R⁶ independently represents a hydrogen atom or an organic group, and
      n2 is an integer of 4 to 20, 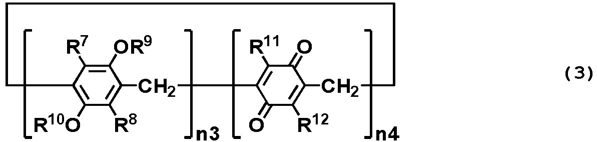 wherein
         R⁷ independently represents a hydrogen atom or an organic group,
         R⁸ independently represents a hydrogen atom or an organic group,
         R⁹ independently represent a hydrogen atom or an organic group,
         R¹⁰ independently represents a hydrogen atom or an organic group,
         R¹¹ independently represents a hydrogen atom or an organic group,
         R¹² independently represents a hydrogen atom or an organic group,
         n3 is an integer of 1 to 19,
         n4 is an integer of 1 to 19,
         a sum of n3 and n4 is 4 to 20, and
         an occurrence order of a unit in parentheses with n3 or n4 is arbitrary in the formula (3).
3. The composite according to embodiment 2, wherein in the formula (1), one or more selected from R¹ to R⁴ is a fluorine-containing organic group.
4. The composite according to embodiment 2 or 3, wherein in the formula (1), one or more selected from R³ and R⁴ is a hydrogen atom.
5. The composite according to any one of embodiments 1 to 4, wherein the cyclic compound is a compound represented by any of the following formulae (1-A), (2-A), and (3-A): 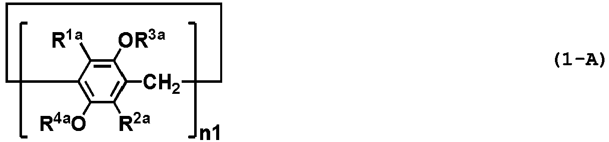 wherein
   R^{1a} independently represents a C₁₋₃₀ alkyl group optionally having one or more substituents, or a hydrogen atom,
   R^{2a} independently represents a C₁₋₃₀ alkyl group optionally having one or more substituents, or a hydrogen atom,
   R^{3a} independently represents a C₁₋₃₀ alkyl group optionally having one or more substituents, or a hydrogen atom,
   R^{4a} independently represents a C₁₋₃₀ alkyl group optionally having one or more substituents, or a hydrogen atom, and
   n1 is an integer of 4 to 20, 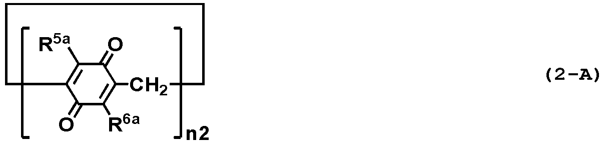 wherein
      R^{5a} independently represents a C₁₋₃₀ alkyl group optionally having one or more substituents, or a hydrogen atom,
      R^{6a} independently represents a C₁₋₃₀ alkyl group optionally having one or more substituents, or a hydrogen atom, and
      n2 is an integer of 4 to 20, 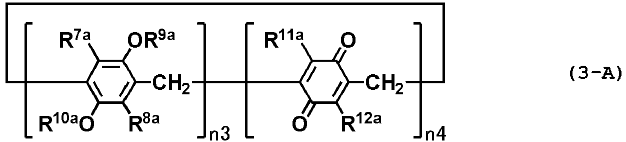 wherein
         R^{7a} independently represents a C₁₋₃₀ alkyl group optionally having one or more substituents, or a hydrogen atom,
         R^{8a} independently represents a C₁₋₃₀ alkyl group optionally having one or more substituents, or a hydrogen atom,
         R^{9a} independently represents a C₁₋₃₀ alkyl group optionally having one or more substituents, or a hydrogen atom,
         R^{10a} independently represents a C₁₋₃₀ alkyl group optionally having one or more substituents, or a hydrogen atom,
         R^{11a} independently represents a C₁₋₃₀ alkyl group optionally having one or more substituents, or a hydrogen atom,
         R^{12a} independently represents a C₁₋₃₀ alkyl group optionally having one or more substituents, or a hydrogen atom,
         n3 is an integer of 1 to 19,
         n4 is an integer of 1 to 19, and
         a sum of n3 and n4 is 4 to 20,
         provided that an occurrence order of a unit in parentheses with n3 or n4 is arbitrary in the formula (3-A).
6. The composite according to any one of embodiments 1 to 5, wherein the fluorine-containing polymer is a linear fluorine-containing polymer optionally having one or more substituents.
7. The composite according to any one of embodiments 1 to 6, wherein the fluorine-containing polymer comprises a fluorine-containing olefin-based polymer.
8. The composite according to embodiment 7, wherein the fluorine-containing olefin-based polymer has a repeating unit formed of a fluorine-containing olefin compound represented by the following formula:

   CR^{f20}R^{f21} = CR^{f22}R^{f23}

   wherein
   R^{f20} represents one selected from a hydrogen atom, a fluorine atom, a chlorine atom, a C₁₋₅ fluoroalkyl group, and a C₁₋₅ perfluoroalkoxy group,
   R^{f21} represents one selected from a hydrogen atom, a fluorine atom, a chlorine atom, a C₁₋₅ fluoroalkyl group, and a C₁₋₅ perfluoroalkoxy group,
   R^{f22} represents one selected from a hydrogen atom, a fluorine atom, a chlorine atom, a C₁₋₅ fluoroalkyl group, and a C₁₋₅ perfluoroalkoxy group,
   R^{f23} represents one selected from a hydrogen atom, a fluorine atom, a chlorine atom, a C₁₋₅ fluoroalkyl group, and a C₁₋₅ perfluoroalkoxy group, and
   one or more of R^{f20} to R^{f23} is a fluorine atom.
9. The composite according to embodiment 8, wherein the fluorine-containing olefin compound is one or more selected from tetrafluoroethylene, trifluoroethylene, vinylidene fluoride, chlorotrifluoroethylene, 1,2-difluoroethylene, hexafluoropropylene, 2,3,3,3-tetrafluoropropene, vinyl fluoride, perfluoromethyl vinyl ether, perfluoroethyl vinyl ether, and perfluoropropyl vinyl ether.
10. The composite according to any one of embodiments 7 to 9, wherein the fluorine-containing olefin-based polymer comprises one or more selected from a chlorotrifluoroethylene/tetrafluoroethylene/perfluoro(alkyl vinyl ether) copolymer, an ethylene/tetrafluoroethylene copolymer, an ethylene/chlorotrifluoroethylene copolymer, polyvinylidene fluoride, a vinylidene fluoride/tetrafluoroethylene copolymer, a vinylidene fluoride/tetrafluoroethylene/chlorotrifluoroethylene copolymer, polychlorotrifluoroethylene, a vinylidene fluoride/hexafluoropropylene copolymer, a vinylidene fluoride/tetrafluoroethylene/hexafluoropropylene copolymer, and poly 1,2-difluoroethylene.
11. The composite according to any one of embodiments 7 to 10, wherein the fluorine-containing olefin-based polymer comprises polyvinylidene fluoride.
12. The composite according to any one of embodiments 1 to 11, wherein the fluorine-containing polymer comprises fluorine-containing polyether.
13. The composite according to embodiment 12, wherein the fluorine-containing polyether is represented by the following formula:

   Y¹-R^{f1}-R^{F}-O_{q}-R^{f2}-Y²

   wherein
   R^{F} represents a divalent fluoropolyether group,
   Y¹ represents one selected from a halogen atom, a hydrogen atom, -COOR^{f3}, - OR^{f3}, -NR^{f3}₂, -NR^{f3}-CO-R^{f3}, -CO-NR^{f3}₂, -NO₂, -CN, -COR^{f4}, -SO₃R^{f4}, and -O-COR^{f4},
   Y² represents one selected from a halogen atom, a hydrogen atom, -COOR^{f3}, - OR^{f3}, -NR^{f3}₂, -NR^{f3}-CO-R^{f3}, -CO-NR^{f3}₂, -NO₂, -CN, -COR^{f4}, -SO₃R^{f4}, and -O-COR^{f4},
   R^{f1} represents a divalent hydrocarbon group optionally having one or more substituents, or a single bond,
   R^{f2} represents a divalent hydrocarbon group optionally having one or more substituents, or a single bond,
   R^{f3} independently represents a C₁₋₁₆ alkyl group optionally having one or more substituents, or a hydrogen atom,
   R^{f4} independently represents a C₁₋₁₆ alkyl group optionally having one or more substituents, a hydrogen atom, or a halogen atom, and
   q is 0 or 1].
14. The composite according to embodiment 13, wherein R^{F} is represented by the following formula:

   -(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

   wherein
   R^{Fa} is independently a hydrogen atom, a fluorine atom, or a chlorine atom,
   a, b, c, d, e, and f are each independently an integer of 0 to 200, a sum of a, b, c, d, e, and f is 1 or more, and an occurrence order of individual repeating units in parentheses with a, b, c, d, e, or f is arbitrary in the formula, provided that when all of R^{Fa} is a hydrogen atom or a chlorine atom, at least one of a, b, c, d, e, and f is 1 or more.
15. The composite according to embodiment 13 or 14, wherein one or more R^{Fa} is a hydrogen atom.
16. The composite according to any one of embodiments 13 to 15, wherein R^{F} is represented by the following formula (f7):

   -(CF₂CF₂CH₂O)_{d}- (f7)

   wherein d represents an integer of 1 to 200.
17. The composite according to any one of embodiments 1 to 16, wherein a proportion of the cyclic compound is 0.01 mass% or more and 99 mass% or less in a total of 100 parts by mass of the fluorine-containing polymer and the cyclic compound.
18. The composite according to any one of embodiments 1 to 17, wherein the fluorine-containing polymer has at least one selected from a glass transition temperature and a melting point at 50°C or higher.
19. The composite according to any one of embodiments 1 to 18, wherein a pyrolysis temperature is 170°C or higher.
20. A method for producing the composite according to embodiments 1 to 19, the method comprising:
   contacting the fluorine-containing polymer and the cyclic compound represented by the formula (I) with each other in an absence of a solvent to obtain the composite.
21. The production method according to embodiment 20, wherein the contacting is performed at a temperature higher than at least one of a glass transition temperature and a melting point of the fluorine-containing polymer.
22. A composition comprising the composite according to any one of embodiments 1 to 19.
23. The composition according to embodiment 22, which is in a powder form.
24. The composition according to embodiment 22, which is in a liquid form.

## Claims

1. A composite comprising: a fluorine-containing polymer; and one or more cyclic compounds that comprise the fluorine-containing polymer, wherein
the cyclic compound comprises a compound represented by the following formula (I): 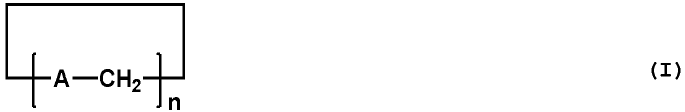 wherein
A independently represents a divalent C₄₋₅₀ organic group containing one or more selected from -OR and -CO-,
R independently represents an organic group optionally containing one or more fluorine atoms, or a hydrogen atom, and
n represents an integer of 4 to 20,
and wherein the number average molecular weight of the fluorine-containing polymer is 3,000 to 300,000.

2. The composite according to claim 1, wherein the cyclic compound contains a compound represented by any of the following formulae (1) to (3): 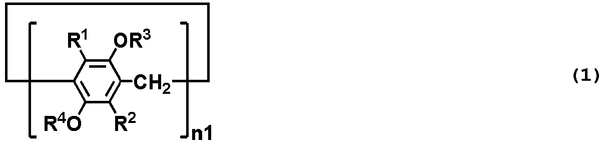 wherein
R¹ independently represents a hydrogen atom or an organic group,
R² independently represents a hydrogen atom or an organic group,
R³ independently represents a hydrogen atom or an organic group,
R⁴ independently represents a hydrogen atom or an organic group, and
n1 is an integer of 4 to 20, 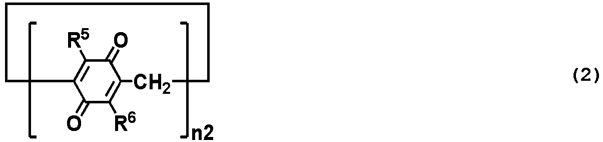 wherein
R⁵ independently represents a hydrogen atom or an organic group,
R⁶ independently represents a hydrogen atom or an organic group, and
n2 is an integer of 4 to 20, 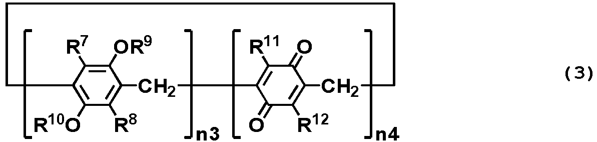 wherein
R⁷ independently represents a hydrogen atom or an organic group,
R⁸ independently represents a hydrogen atom or an organic group,
R⁹ independently represent a hydrogen atom or an organic group,
R¹⁰ independently represents a hydrogen atom or an organic group,
R¹¹ independently represents a hydrogen atom or an organic group,
R¹² independently represents a hydrogen atom or an organic group,
n3 is an integer of 1 to 19,
n4 is an integer of 1 to 19,
a sum of n3 and n4 is 4 to 20, and
an occurrence order of a unit in parentheses with n3 or n4 is arbitrary in the formula (3).

3. The composite according to claim 2, wherein in the formula (1), one or more selected from R¹ to R⁴ is a fluorine-containing organic group.

4. The composite according to any one of claims 1 to 3, wherein the cyclic compound is a compound represented by any of the following formulae (1-A), (2-A), and (3-A): 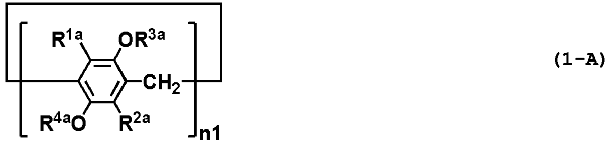 wherein
R^{1a} independently represents a C₁₋₃₀ alkyl group optionally having one or more substituents, or a hydrogen atom,
R^{2a} independently represents a C₁₋₃₀ alkyl group optionally having one or more substituents, or a hydrogen atom,
R^{3a} independently represents a C₁₋₃₀ alkyl group optionally having one or more substituents, or a hydrogen atom,
R^{4a} independently represents a C₁₋₃₀ alkyl group optionally having one or more substituents, or a hydrogen atom, and
n1 is an integer of 4 to 20, 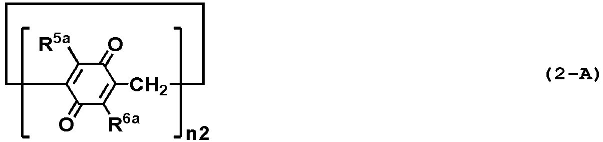 wherein
R^{5a} independently represents a C₁₋₃₀ alkyl group optionally having one or more substituents, or a hydrogen atom,
R^{6a} independently represents a C₁₋₃₀ alkyl group optionally having one or more substituents, or a hydrogen atom, and
n2 is an integer of 4 to 20, 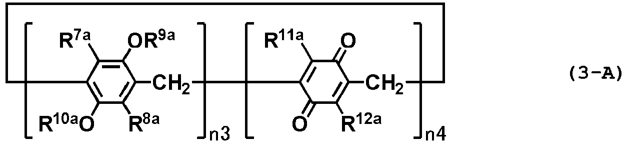 wherein
R^{7a} independently represents a C₁₋₃₀ alkyl group optionally having one or more substituents, or a hydrogen atom,
R^{8a} independently represents a C₁₋₃₀ alkyl group optionally having one or more substituents, or a hydrogen atom,
R^{9a} independently represents a C₁₋₃₀ alkyl group optionally having one or more substituents, or a hydrogen atom,
R^{10a} independently represents a C₁₋₃₀ alkyl group optionally having one or more substituents, or a hydrogen atom,
R^{11a} independently represents a C₁₋₃₀ alkyl group optionally having one or more substituents, or a hydrogen atom,
R^{12a} independently represents a C₁₋₃₀ alkyl group optionally having one or more substituents, or a hydrogen atom,
n3 is an integer of 1 to 19,
n4 is an integer of 1 to 19, and
a sum of n3 and n4 is 4 to 20,
provided that an occurrence order of a unit in parentheses with n3 or n4 is arbitrary in the formula (3-A).

5. The composite according to any one of claims 1 to 4, wherein the fluorine-containing polymer is a linear fluorine-containing polymer optionally having one or more substituents.

6. The composite according to any one of claims 1 to 5, wherein the fluorine-containing polymer comprises a fluorine-containing olefin-based polymer preferably having
a repeating unit formed of a fluorine-containing olefin compound represented by the following formula:
CR^{f20}R^{f21} = CR^{f22}R^{f23}
wherein
R^{f20} represents one selected from a hydrogen atom, a fluorine atom, a chlorine atom, a C₁₋₅ fluoroalkyl group, and a C₁₋₅ perfluoroalkoxy group,
R^{f21} represents one selected from a hydrogen atom, a fluorine atom, a chlorine atom, a C₁₋₅ fluoroalkyl group, and a C₁₋₅ perfluoroalkoxy group,
R^{f22} represents one selected from a hydrogen atom, a fluorine atom, a chlorine atom, a C₁₋₅ fluoroalkyl group, and a C₁₋₅ perfluoroalkoxy group,
R^{f23} represents one selected from a hydrogen atom, a fluorine atom, a chlorine atom, a C₁₋₅ fluoroalkyl group, and a C₁₋₅ perfluoroalkoxy group, and
one or more of R^{f20} to R^{f23} is a fluorine atom.

7. The composite according to claim 6, wherein the fluorine-containing olefin compound is one or more selected from tetrafluoroethylene, trifluoroethylene, vinylidene fluoride, chlorotrifluoroethylene, 1,2-difluoroethylene, hexafluoropropylene, 2,3,3,3-tetrafluoropropene, vinyl fluoride, perfluoromethyl vinyl ether, perfluoroethyl vinyl ether, and perfluoropropyl vinyl ether.

8. The composite according to claim 6 or 7, wherein the fluorine-containing olefin-based polymer comprises one or more selected from a chlorotrifluoroethylene/tetrafluoroethylene/perfluoro(alkyl vinyl ether) copolymer, an ethylene/tetrafluoroethylene copolymer, an ethylene/chlorotrifluoroethylene copolymer, polyvinylidene fluoride, a vinylidene fluoride/tetrafluoroethylene copolymer, a vinylidene fluoride/tetrafluoroethylene/chlorotrifluoroethylene copolymer, polychlorotrifluoroethylene, a vinylidene fluoride/hexafluoropropylene copolymer, a vinylidene fluoride/tetrafluoroethylene/hexafluoropropylene copolymer, and poly 1,2-difluoroethylene, preferably
polyvinylidene fluoride.

9. The composite according to any one of claims 1 to 8, wherein the fluorine-containing polymer comprises fluorine-containing polyether preferably represented by the following formula:
Y¹-R^{f1}-R^{F}-O_{q}-R^{f2}-Y²
wherein
R^{F} represents a divalent fluoropolyether group preferably represented by the following formula:
-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-
wherein
R^{Fa} is independently a hydrogen atom, a fluorine atom, or a chlorine atom,
a, b, c, d, e, and f are each independently an integer of 0 to 200, a sum of a, b, c, d, e, and f is 1 or more, and an occurrence order of individual repeating units in parentheses with a, b, c, d, e, or f is arbitrary in the formula, provided that when all of R^{Fa} is a hydrogen atom or a chlorine atom, at least one of a, b, c, d, e, and f is 1 or more and
more preferably represented by the following formula (f7):
-(CF₂CF₂CH₂O)₄- (f7)
wherein d represents an integer of 1 to 200,
Y¹ represents one selected from a halogen atom, a hydrogen atom, -COOR^{f3}, - OR^{f3}, -NR^{f3}₂, -NR^{f3}-CO-R^{f3}, -CO-NR^{f3}₂, -NO₂, -CN, -COR^{f4}, -SO₃R^{f4}, and -O-COR^{f4},
Y² represents one selected from a halogen atom, a hydrogen atom, -COOR^{f3}, - OR^{f3}, -NR^{f3}₂, -NR^{f3}-CO-R^{f3}, -CO-NR^{f3}₂, -NO₂, -CN, -COR^{f4}, -SO₃R^{f4}, and -O-COR^{f4},
R^{f1} represents a divalent hydrocarbon group optionally having one or more substituents, or a single bond,
R^{f2} represents a divalent hydrocarbon group optionally having one or more substituents, or a single bond,
R^{f3} independently represents a C₁₋₁₆ alkyl group optionally having one or more substituents, or a hydrogen atom,
R^{f4} independently represents a C₁₋₁₆ alkyl group optionally having one or more substituents, a hydrogen atom, or a halogen atom, and
q is 0 or 1].

10. The composite according to claim 9, wherein one or more R^{Fa} is a hydrogen atom.

11. The composite according to any one of claims 1 to 10, wherein a proportion of the cyclic compound is 0.01 mass% or more and 99 mass% or less in a total of 100 parts by mass of the fluorine-containing polymer and the cyclic compound.

12. The composite according to any one of claims 1 to 11, wherein the fluorine-containing polymer has at least one selected from a glass transition temperature and a melting point at 50°C or higher.

13. The composite according to any one of claims 1 to 12, wherein a pyrolysis temperature is 170°C or higher.

14. A method for producing the composite according to any one of claims 1 to 13, the method comprising:
contacting the fluorine-containing polymer and the cyclic compound represented by the formula (I) with each other in an absence of a solvent to obtain the composite preferably at a temperature higher than at least one of a glass transition temperature and a melting point of the fluorine-containing polymer,
and wherein the number average molecular weight of the fluorine-containing polymer is 3,000 to 300,000.

15. A composition comprising the composite according to any one of claims 1 to 13, preferably in a powder form or a liquid form.
